# EUROPEAN PATENT APPLICATION

(11) **EP 4 285 737 A1**
(43) Date of publication of application: **06.12.2023**
(21) Application number: 22177343.5
(22) Date of filing: 05.06.2022
(51) Int. Cl.: A23L 3/3472, A23L 3/3562, C08J 3/075, C08L 5/08, A23B 4/10, A23B 4/18, A23B 4/20, A23B 7/154, A23B 7/16

(54) **CHITOSAN COMPOSITION USING AS A STABILISING AND PRESERVING AGENT FOR FOOD PRODUCTS, METHOD FOR OBTAINING THE COMPOSITION, USE OF THE COMPOSITION ASA PRESERVING AND STABILISING AGENT FOR THE PROTECTION OF FOOD PRODUCTS**

(71) Applicant: Chitone sp. z o.o., 84-300 Lebork (PL)
(72) Inventor: Gorczyca, Grzegorz, Gdansk (PL); Tylingo, Robert, 80-125 Gdansk (PL); Kempa, Piotr, 82-200 Malbork (PL); Skowronski, Lukasz, 80-126 Gdansk (PL); Kowalczyk, Joanna, 80-034 Gdansk (PL); Burczyk, Dorota, 84-300 Lebork (PL); Bajger, Gabriela, 84-300 Pepowo (PL)
(74) Representative: Pawlowska, Justyna

(57) **Abstract**

The subject of the invention is a chitosan composition in the form of an aqueous hydrogel containing water, chitosan, and carbon dioxide for use as a stabilising and preserving agent for food products. The final concentration of chemically unmodified chitosan, wherein the functional groups are hydroxyl groups, primary amine groups and N-acetyl groups of glucosamine, is in the range of 0.1 to 3.0%, w/w, while the final concentration of carbon dioxide in the final composition is in the range of 0.01 to 4.0%, w/w. The compositions use chitosan with a molecular weight from 50 to 400 kDa and a degree of deacetylation ranging from 20% to 99%. The invention also describes a method of preparation, use of the compositions, and various forms of the compositions and dedicated formula.

## Description

The invention relates to a chitosan-based composition used as a stabilising and preserving agent for food products, a method for obtaining the composition, the use of the composition as a preserving and stabilising agent for protecting food products, in particular as a biofilm or in a dedicated dosage form. The invention is particularly applicable for the protection of fish, vegetables and fruit.

Many areas of chitosan use are known, including in medicine and biology. Chitosan is used in various forms, compositions, mixtures and formulations. There are many methods known for obtaining chitosan compositions depending on the application and final forms.

Precipitation of chitosan in acids and compositions with various salts is a well-known practice. Publication WO2013021836A1 reveals a composition of a salt of chitosan and organic or inorganic acids.

A method of producing a chitosan-protein biopolymer material is known from the description included in PL222739B1. The paper points to the use of a chitosan solution against strains of *Staphylococcus aureus,* with cooling properties, or a dietary supplement. Chitosan compositions contain active ingredients: The use of the following compounds and substances has been described: antimicrobial agents; antifungal compounds; compounds considered as food additives including preservatives, colourants, flavourings, antioxidants, flavourings; water soluble vitamins; fat-soluble vitamins in the form of micelles; proteins and peptides including enzymes and hormones, preferably androgens, estrogens, corticosteroids, insulin, melatonin; micro- and macroelements including salts containing calcium, magnesium, potassium, iron, zinc, phosphorus ions analgesics and anti-inflammatories; antipsoriatics; local anaesthetics; antivirals; plant oils and extracts; biologically active low molecular weight compounds including menthol and its derivatives, capsaicin, caffeine, taurine, D-panthenol, quinine and/or a cross-linking agent such as genipin. The concentration of chitosan with respect to dry matter in aqueous solution is not less than 0.001% by weight or the concentration of chitosan with respect to its dry matter in aqueous solution is not less than 1.0% by weight.

A method for obtaining this composition is also described in such a way that a solution of chitosan is prepared with acetic acid or lactic acid, which is then subjected to neutralization and separation, after which the obtained precipitate, i.e. microcrystalline chitosan, is washed with water, and then the obtained solution of chemically unmodified microcrystalline chitosan is supplemented with water. While stirring, the solution is saturated with carbon dioxide, advantageously in the form of gas and/or dry ice, until the solution is clear and the chitosan is dissolved preferably at 25°C.

Another chitosan composition and a method for producing a chitosan hydrogel membrane are known from the description specified in PL223280B1. A method for producing a chitosan-protein biopolymer material has been provided, wherein a solution of chitosan in a mixture of acids is prepared, which is then neutralised and separated, and the resulting precipitate is washed with water, mixed with modifying additives such as crosslinking compounds, plasticisers, biologically active compounds, and preservatives, moulded, incubated and conditioned in a specified manner. Prior to the addition of the modification additives, the chitosan solution is saturated under atmospheric pressure, preferably during the homogenization process, with carbon dioxide gas and/or dry ice until the chitosan is dissolved and then mixed with a dispersion of collagen proteins and/or gelatin. A hydrogel in the form of a membrane is mainly described. As to the use of this mixture, a medical application is provided for a chitosan-protein hydrogel in the form of a membrane, combined with a cotton compress, which shows activity against strains of *Staphylococcus aureus;* a chitosan-protein biomaterial in the form of a sponge; a chitosan-protein biomaterial in the form of a sponge with enhanced antioxidant properties due to ascorbyl glucoside. The papers do not detail the use for food preservation.

Chitosan compositions in gel and hydrogel form are also described in EP1986692, US20130044601, JP2003171469, among others. The papers describe how to obtain thise compositions in a presence of acid and salt. The papers do not discuss the use for food preservation.

A major problem in storing food products, especially fruit, vegetables and fish, is the short shelf life and/or the need to process them. Contamination of food products with micro-organisms, especially *Listeria monocytogenes, Staphylococcus aureus* and *Escherichia coli,* is also an issue.

In a standard procedure, the number of microorganisms (the so-called total bacterial count) increases with storage time in food products, including fish, and the number of nitrogenous compounds rises as well. There are ceilings for both these parameters, set by regulations, above which fish are considered unfit for consumption. At the same time, fewer microorganisms and less nitrogenous compounds indicate a better product quality. Another major concern for the fish industry, but also for other food industries, is *Listeria monocytogenes,* a bacterium that causes severe food poisoning and, in extreme cases, death. Currently, every product of the fish industry is tested for the presence of this bacterium by various specialised entities. If it is detected, then the authorities responsible for supervising food establishments close the plant of the producer of such a product, order the withdrawal of all the products produced in the plant at that time and require disinfection, which creates enormous costs on the part of the producer and, above all, puts them at risk of losing revenue and having to pay penalties resulting from commercial contracts concluded with customers. In the industry, fish offcuts obtained during fillet production are smoked together with fish fillets. Such offcuts are more difficult to store and transport than fish fillet because of the higher risk associated with an increase in total microbial counts as well as *Listeria monocytogenes* infections.

Salt is one of the well-known natural preservatives used in the food industry. For example, in the standard fish smoking process, the fish is injected with brine (with any additives) before smoking. The concentration of salt in the injection solution as well as the volume of injection must be chosen so that the salt content of the fish reaches 2,5% (%w/w), although this may vary between producers and the intended use of the fish.

Typically, brine is prepared with the maximum possible salt concentration, for example 24-27%, and the salt content of the fish is controlled by the injection volume. However, the use of brine in the preservation of food products is limited only to those products where a change in the taste profile of the protected product is acceptable. As brine changes the taste of the product, it cannot be used in a large part of food products.

The use of chitosan and its compositions in food preservation is well known. Application documents CN103584252A and CN103564600A describe a chitosan composition where chitosan and salt are used in the preservation of food products as a preservative. The composition concerns a natural food preservative, containing 3-15% by weight of pine needle extract, 1-2% by weight of chitosan and 1-2% by weight of table salt. Similarly, Chinese application specification CN103564600A describes a natural preservative containing 3-7% by weight of extract of *Scutellaria baicalensis Georgi,* 1-2% by weight of chitosan and 1-2% by weight of table salt.

The use of chitosan with food products is also known from CN107665310 and JP2003171469. Additionally, JP2003171469 reveals the use of chitosan and gel carbonate salts in food preservation. However, the exact composition was not described in detail.

Known methods of preparing chitosan compositions used to protect food products require the use of acids to lower the pH to a level that allows the chitosan to dissolve. As a result, apart from the obvious impact on the sensory profile of the protected product, such chitosan compositions include an additional ingredient, which the producer is obliged to indicate on the product label, and this in turn is contrary to the growing need of producers, especially of natural products, to ensure the most natural mixture possible, i.e. the need to maintain the so-called clean label.

Despite the available solutions, the storage of certain food products, especially fruit, vegetables and fish, still struggles with the problem of short shelf life and/or the need for processing. Contamination of food products with micro-organisms, especially *Listeria monocytogenes, Staphylococcus aureus* and *Escherichia coli,* is also an issue.

Hence there is a need to develop a preserving and stabilising agent which is also a preservative for food stored for sale, i.e. an agent which improves quality parameters, reduces the risk of contamination of stored food products, especially fruit and fish, and at the same time an agent which will enable the producer to keep the label as clean as possible (i.e. the list of food additives used will be as short as possible).

The purpose of the invention was to select the components of a stabilising and protecting agent based on a chitosan composition - based on chitosan, and to select its form affecting the method of use/application enabling the creation of a dedicated form of stabilising and protecting agent for food products, in particular for the production of natural food (i.e., food with the shortest possible list of food additives used), including in particular vegetables, fruits, fish, meats and processed products thereof, to protect such food products from deterioration of the original quality parameters during their shelf life, including to extend their shelf life and/or to extend their processing date, including for the preservation of food products. The aim was also to introduce modifications to the known method of producing the chitosan composition in order to improve its physicochemical parameters, extend its stability and enable its use and production on an industrial scale.

The subject matter of the invention relates to a qualitatively and quantitatively selected chitosan composition in the form of a hydrogel designed for use as a preserving and stabilising agent for food products, especially natural products, in the form of a liquid hydrogel, with the main qualitative variant of the composition per the invention being: water, chitosan, carbon dioxide. The composition can be used directly to protect and stabilise food products, for example by creating a biofilm on the surfaces of products, especially vegetables, fruit, fish, or as a dedicated - applicable formula - pre-formulated dosage - dose described below.

In addition, the invention includes a method of obtaining - manufacturing the main chitosan composition- , which is obtained by dissolving suitably prepared chitosan, of selected amount and physical and chemical parameters, but of any origin, in an aqueous solution of carbonic acid, where the carbonic acid is generated by introducing carbon dioxide preferably in gaseous form into the suitably prepared chitosan in water. Because to its properties provided by the composition based on qualitative ingredients - composition (in variants - forms of the compositions) and quantitative components, as well as the method of preparation, the composition according to the invention has a dedicated use for food products, especially natural products, for preserving-stabilizing purposes, i.e. protection of these products against deterioration of their initial/improved quality parameters during the storage period, including protection against loss of water (weight), loss of turgor (firmness), change of colour, protection against caking during freezing, as well as enhancement of the sensory parameters of processed products and their preservation, which directly contributes to increasing the value of the food product and also contributes to prolonging its shelf-life and/or processing date, and also reduces the risk of cross-contamination of food products by micro-organisms, especially *Listeria monocytogenes, Staphylococcus aureus* and *Escherichia coli,* while meeting producers' needs for keeping the label of food products as clean as possible, i.e. the need to supply products with the shortest possible list of food additives.

The composition according to the invention in preferable embodiment of the composition, in the form of a hydrogel may contain the addition of an aqueous solution of sodium chloride - NaCl and, in another embodiment of the composition, in the form of a hydrogel, the addition of NaCl and an aqueous solution of gelatin. The invention also refers to a method for preparing a chitosan solution with a sodium chloride solution or a mixture with sodium chloride and an aqueous gelatin solution.

The preserving and stabilising agent for food products, especially for natural food products, which is a chitosan composition in the form of a hydrogel without added salt or salt and gelatin, according to the invention is applied directly to the surface of the food product to create a preserving and stabilising insulating biofilm (outer layer, coating). The preserving and stabilising agent in the basic variant of chitosan composition, can be used to coat the surface of food products, especially fruit, vegetables or fish, to create a biofilm. The hydrogel form according to the invention therefore enables a preserving layer to be formed on the surface of the food product, where the composition will include exclusively chemically unmodified chitosan. The composition in the form of biofilm may be applied by any known method or device, including in particular various types of spraying/fogging devices, and cisterns (soaking) and application by brushing, optionally using drying devices.

In addition, one dedicated - applicable formula of the preserving and stabilising agent based on the chitosan composition has been developed specifically for natural products, especially for the above embodiment with added aqueous NaCl and aqueous NaCl and aqueous gelatine solution, enabling direct application - introducing the formula to food products. This form also serves as a protecting and stabilising agent, with the above properties, for direct application to the food product.

Therefore, the applicable formula of the preserving and stabilising agent has been developed for food products, especially natural food products, namely a chitosan composition in the form of a hydrogel, especially with added aqueous solution of sodium chloride - NaCl and in another variant with added NaCl and aqueous solution of gelatin. It is a pre-formulated dose for direct injection into a food product under pressure. This formula of the agent is intended for direct injection into food products, especially fish or meat and products resulting from their processing, with a balanced ratio between the weight of the composition and the weight of the protected food product. Any of the known methods and devices dedicated to this purpose may be used, including in particular various types of injection or mixing equipment. This formula of the preserving and stabilising agent uses a variant of the composition as described above, that is, a qualitatively and quantitatively selected chitosan composition in which the modifying additive is a salt - an aqueous solution of sodium chloride or an aqueous solution of sodium chloride and gelatin, as well as a variant of the chitosan composition without modifying additives.

The preserving and stabilising agent for food products, especially natural food products, based on the composition is in the form of a liquid hydrogel, whose qualitative composition comprises water, chitosan, carbon dioxide and, in a variant according to the invention, an aqueous solution of gelatin and NaCl or an aqueous solution of NaCl alone may be therefore used as to create biofilm on the surface of food products or in a dedicated form of a pre-formulated dose for injection into food products.

The main - basic composition according to invention (chitosan, water, CO2) is its qualitative composition. The final concentration of chitosan in such a composition is from 0.1 to 3.0%, w/w, preferably from 0.1 to 1.0%, w/w, while the final concentration of carbon dioxide CO2 in the final composition is from 0.01 to 4.0%, w/w, preferably from 0.1 to 0.8%. CO2 in the composition is in the form of carbonic acid but according to the invention the amount -concentration of CO2 in the composition is given. The rest is water. The compositions use unmodified chitosan with a molecular weight from 50 to 400 kDa, preferably 50-300 kDa, and a degree of deacetylation ranging from 20% to 99%, preferably 70-95%. The term chemically unmodified chitosan refers to a molecule in which the only functional groups are hydroxyl groups, primary amine groups and N-acetyl groups of glucosamine.

This composition is used for food products in which protection on the surface of the product is desirable, including products such as fruits, vegetables, fish, and meat, as well as for products in which internal protection is advisable, such as processed foods.

The first variant - embodiment of the chitosan composition in the form of a hydrogel with NaCl as a modifying additive intended as a preserving and stabilising agent for the protection of food products, including natural food products, such as in particular fish and meats and products resulting from their processing, intended for example for smoking, is a composition with the following final composition: water, chitosan, carbon dioxide and an aqueous solution of the modifying additive - sodium chloride. The final concentration of chitosan in such a composition according to the invention is from 0.1 to 3.0%, preferably from 0.3 to 1.0%, the concentration of sodium chloride is from 7.0 to 16.0%, preferably from 10.0 to 13.5%, while the concentration of carbon dioxide is from 0.01 to 4.0%, w/w, preferably from 0.1 to 0.8%. The rest of the composition is completed with water. This variant of the preserving and stabilising agent for food products is used in a particular applicable formula according to the invention, which provides protection from the inside, that is in a pre-formulated dose injected into the product by pressure, further referred to as the "injection".

A second variant - embodiment of the chitosan composition in the form of a hydrogel with NaCl as a modifying additive and gelatin as a preserving and stabilising agent for protecting natural food products, in particular for protecting fish and meat and products resulting from their processing, is an agent with a final composition comprising water, chitosan, carbon dioxide and an aqueous solution of modifying additives: sodium chloride and gelatin. The final concentration of chitosan in such a composition according to the invention is from 0.1 to 3.0%, preferably from 0.3 to 1.0%, the final concentration of sodium chloride is from 1.0 to 4.0%, preferably from 1.0 to 2.0%, the final concentration of gelatin is from 0.2 to 6.0%, preferably from 0.5 to 1.0%, while the concentration of carbon dioxide is from 0.01 to 4.0%, w/w, preferably from 0.1 to 0.8%. The rest of the composition is water. This composition is a particular variant intended, according to the invention, for use in a form enabling the product to be protected from the inside, introduced into the product by injection or mixing. Such an amount of NaCl protects the gelatin from premature gelation prior to addition to the chitosan solution and provides adequate stability of the water, chitosan and gelatin composition.

In the chitosan composition comprising water, chitosan, carbon dioxide and an aqueous solution of the modifying additives: sodium chloride and gelatin, gelatin obtained by known methods is used.

Other modifying additives than those described above may be added to the compositions according to the invention depending on the formulation of the final food product, including other stabilisers and seasonings.

Chitosan of any origin may be used in the chitosan composition as well as in all variants of the chitosan composition according to the invention, although the preferred choice is chitosan obtained in the deacetylation process deof chitin of plant or animal origin, or obtained in fermentation processes of biotechnological production, for example from fungi cultures, such as *Zygomycetous,* including *Absidia coerulea, Benjaminiella poitrasii, Cunninghamella elegans, Gongrenella butleri, Mucor rouxii, Mucor racemosus,* or *Rhizopus oryzae.* Acid-soluble chitosan, preferably non-chemically modified chitosan obtained from available sources, is used to prepare the chitosan compositions according to the invention.

The stabilising and preserving agent based on a chitosan composition in the form of a hydrogel according to the invention is intended to be used externally, i.e. applied to the surface of a food product, as a biofilm (layer, coating) for sealing and protecting the surface of food products, especially fruit, vegetables or fish. The hydrogel form therefore allows a preserving layer to be formed on the surface of the food product. The biofilm is obtained by known methods such as direct spraying of the agent described herein onto a food product to create a layer, for example by fogging, direct soaking or brushing, using equipment and procedures typical for the processing of such food products. The process of applying chitosan compositions in the form of a hydrogel to food products is carried out so that as much of the outer surface of the food product as possible is in contact with the chitosan composition used.

According to the invention, a dedicated formula - the applicable fomula of the stabilising and preserving agent for natural food products has also been developed, i.e., a pre-formulated dose introduced into food products by direct "injection" or by mixing, especially for fish or meat, with a balanced ratio between the weight of the composition and the weight of the protected food product, intended for internal protection. This form ulais introduced into the product by injection or as a substance that is mixed with the product using typical equipment and procedures employed in the processing of such food products. However, it is characterized in that the weight of the introduced chitosan composition is adjusted to match the desired amount of the chitosan composition to be present in the stabilised food product. According to the invention, chitosan compositions are used in an amount corresponding to 5% to 15%, preferably 8% to 10%, of the food product to be injected.

This dedicated formula - applicable formula intended for direct application to the food product has been designed for foods which require protection from the inside, including products such as meats, fish and processed products thereof, as well as products obtained from the processing of vegetables and/or fruits.

According to the invention, a method has also been developed for obtaining - producing a chitosan composition in the form of a liquid hydrogel, with the following qualitative composition: water, chitosan and carbon dioxide, which is obtained by dissolving suitably prepared chitosan, of selected amount and physical and chemical parameters in an aqueous solution of carbonic acid, where the carbonic acid is generated by introducing carbon dioxide preferably in gaseous form into the suitably prepared chitosan in water. A method for preparing chitosan compositions by combining a solution containing water, chitosan, and carbon dioxide with modifying additives including an aqueous solution of sodium chloride or an aqueous solution of gelatin and sodium chloride is also provided. The process of obtaining chitosan compositions according to the invention involves at least two steps.

In the first step of obtaining the chitosan compositions according to the invention, an aqueous solution of chitosan with an acidic pH is prepared by known methods and using an organic or inorganic acid, or mixtures thereof, edible for humans and/or animals, preferably in a lactic acid solution, which is then neutralised to produce a chitosan precipitate,while it is essential that the concentration of chitosan in the aqueous solution at acidic pH is from 0.7 to 3.0% w/w, preferably in the range of 1.3 to 1.6% w/w, while the concentration of acid is high enough to allow dissolution of the chitosan. Typically the acid concentration in such solutions is from 0.5 to 5.0% w/w, preferably from 0.9 to 1.5% w/w. The indicated concentration range for chitosan in the acid solution that is neutralised to produce a chitosan precipitate is particularly important for the formation of a precipitate with a suitable compact structure, which enables subsequent operations on the chitosan precipitate (e.g. facilitates separation). According to the invention, the neutralisation process is carried out using aqueous alkaline solutions, preferably of sodium or potassium hydroxide, which are obtained by dissolving alkaline substances, permitted to be produced in the food industry, in water, with a concentration from 1 to 10%, preferably from 1 to 3%, by gradually adding the alkaline solution to the chitosan solution, while stirring constantly. The neutralisation of the chitosan solution continues until the pH of the solution resulting from the addition of the alkali to the chitosan solution reaches a value between 8.6 and 12, preferably between 9 and 10. The resulting chitosan precipitate is separated using typical precipitate separation methods, preferably using a filter press. It is advisable to rinse the precipitate with water during the precipitate separation processes to remove any excess acid salt that has resulted from the addition of the alkali solution to the acid solution containing the chitosan. In the preferable embodiment in which the process uses an aqueous lactic acid solution and an aqueous sodium hydroxide solution, excess of sodium lactate and excess of sodium hydroxide are removed during washing of the precipitate.

In the second step of obtaining the chitosan compositions, according to the invention, the obtained filtered chitosan precipitate, preferably washed, is supplemented with water in such an amount that, when mixed with the precipitate, it will be possible to obtain a chitosan suspension in which the concentration of chitosan relative to its dry weight will be from 0.1 to 3.0%, preferably from 0.1 to 1.0% and is then preferably homogenised to obtain a suspension of the chitosan precipitate in water. The suspension so obtained is then mixed at a temperature from 0 to 40°C, preferably from 2 to 25°C, preferably at atmospheric pressure, and during mixing the solution is saturated with gaseous carbon dioxide until the pH of the saturated solution is from 5.0 to 5.5 and the chitosan is dissolved. The carbon dioxide saturation time is variable and depends on the concentration of chitosan in the produced chitosan composition, the carbon dioxide saturation method, the hardness of the water used in the process, and the intensity of mixing. Homogenisation is used to accelerate the dissolution of the chitosan suspended in water as a precipitate and is carried out by known methods until the compact aggregates of the chitosan precipitate have been disintegrated, preferably until the equivalent diameter of the disintegrated water-suspended chitosan precipitate particles is no greater than 0.1 mm. A method of chitosan composition production according to the invention is characterized in that the water used is water with a hardness from 0 to 30°dH, preferably from 0 to 10, in all steps of the process, as this provides a higher solubility of carbon dioxide and thus facilitates the dissolution of the chitosan precipitate obtained. A method of chitosan composition production according to the invention described above is also characterized in that after separating the chitosan precipitate, and before adding water and saturating with carbon dioxide to produce the chitosan solution, the precipitate is heated to a temperature ranging from 95 to 140°C and is further heated at this temperature for a period of not more than 2 hours, preferably from 20 to 60 minutes, at a pressure from 1 to 3 atmospheres. Any known method may be used to heat the precipitate, while it is preferable to place the chitosan precipitate in a water bath, or to perform steam sterilisation using an autoclave, after portioning into packages designed for such processes. The heating of the chitosan precipitate 1) minimises/removes residual characteristic odour from the chitosan solutions obtained in subsequent stages, where the chitosan used in the process was extracted from the chitin of shellfish carapaces and other seafood; 2) reduces the loss of viscosity of the chitosan solutions over time, which is characteristic of chitosan solutions obtained by typical methods; 3) enables storage of the precipitate so that the production of chitosan compositions can be spread over time (into lengthy steps necessary to obtain the filtered chitosan precipitate and much shorter steps of producing the target chitosan compositions), thereby optimising the production processes to meet the needs of the entity responsible for producing the final chitosan compositions.

In the case of binary or multicomponent chitosan compositions, further production steps are carried out, which comprise mixing a minimum of two solutions, one of which is a solution of chitosan with the following qualitative composition: water, chitosan and carbon dioxide, obtained in the method according to the invention (detailed in step two described above), while the second solution is a solution of one or more modifying additives. Significant variants of the invention are methods for producing two variations of chitosan compositions characteristic for the invention, the first of which is a composition comprising water, chitosan, carbon dioxide, and sodium chloride, and the second is a composition comprising water, chitosan, carbon dioxide, sodium chloride, and gelatin, whereas both compositions are used to protect food products, preferably fresh or processed fish and meat.

The first variant according to the invention provides a method for preparing a chitosan composition obtained by combining an aqueous solution of chitosan with the following qualitative amount of water, chitosan and carbon dioxide and an aqueous solution of sodium chloride, where the final concentration of sodium chloride results in a final concentration of sodium chloride in the chitosan composition ranging from 7.0 to 16.0%. One important part of this method according to the invention is the selection of the appropriate concentration of those two solutions before mixing, i.e. the sodium chloride solutions and the chitosan solution, and the ratio of the weight of the sodium chloride solution introduced into the chitosan solution to the weight of the chitosan solution, as well as the appropriate way of introducing the sodium chloride solution into the chitosan solution, so as not to cause the chitosan to precipitate out of the solution in the process. Another variant according to the invention is to combine a sodium chloride solution at a concentration from 10% to 27%, preferably 20% to 27%, with a chitosan solution at twice the desired chitosan concentration in the target mixture from 0.1% to 3.0%, preferably from 0.7% to 1.5%; in a 1:1 ratio. According to the invention, it is important to ensure a constant supply of gaseous carbon dioxide to the system and continuous mixing when combining the two solutions, which prevents the chitosan precipitate from re-precipitating and enables the chitosan composition to be prepared with the highest possible concentration of sodium chloride.

Furthermore, according to the invention, a method has been developed for preparing a chitosan composition obtained by combining an aqueous solution of chitosan with the following qualitative composition: water, chitosan, carbon dioxide, gelatin, and sodium chloride, where the final concentration of chitosan ranges from 0.1 to 3, 0%, preferably from 0.3 to 1.0%, the final concentration of sodium chloride is from 1.0 to 4.0%, preferably from 1.0 to 2.0%, the final concentration of gelatin is from 0.2 to 6.0%, preferably from 0.5 to 1.0%, while the concentration of carbon dioxide is from 0.01 to 4.0%, w/w, preferably from 0.1 to 0.8%.

This composition is made by combining two solutions:
(1) a solution of chitosan comprising water, chitosan, and carbon dioxide, obtained according to the method according to the invention, with a concentration of chitosan from 0.1 to 3.0%, preferably from 0.7 to 1.5%;
(2) a solution of gelatin and sodium chloride, with a concentration of gelatin from 0.5 to 8.0%, preferably from 1.0 to 2.0%, and a concentration of sodium chloride from 1.0 to 10.0%, preferably from 1.0 to 5.0%;
in a ratio of the 1st solution to the 2nd solution ranging from 9:1 to 1:3, preferably in a ratio from 3:2 to 2:3, preferably in a ratio of 1:1. However, it is characterized in that the final concentration of sodium chloride in the resulting composition after the two solutions have been mixed should be from 0.5 to 4.0%, preferably from 1.0 to 2.0%. The added sodium chloride keeps the chitosan composition according to the invention in the form of a liquid hydrogel, protects it from gelation resulting from the interaction between chitosan and gelatin, and thus enables its use according to the invention. An aqueous solution of gelatin is obtained by known methods, preferably from fragments of animate matter derived from the same animal species whose fragments were used in the production of the food product to be protected by the chitosan composition (e.g. in the case of a chitosan composition comprising water, chitosan, carbon dioxide, sodium chloride, and gelatin, intended to protect the quality parameters of Atlantic cod after thawing, an aqueous solution of gelatin produced from the skins of Atlantic cod which is a waste product from other processes is used).

The invention provides the following advantages for the process of storing and transporting food products, especially natural food products:
- a significant reduction in the total microbial count during storage, thus improving product quality and safety;
- significant reduction of nitrogenous compounds during storage, thus improving product quality and safety;
- improvement of sensory parameters of food products, in particular of smoked fish, for example reduction of the non-uniform stratification of the fish slice;
- reducing the loss of water in a food product, for example in a fish that has been injected with compositions according to the invention, or in fruits and vegetables that have been treated with compositions as per the invention, during the technological process, making these products heavier and of greater value to industry;
- preventing the emergence of pathogenic microorganisms, in particular *Listeria monocytogenes,* which provides the industry with certain protection against infection by this bacterium and the consequences associated with the occurrence of such an infection;
- delaying the ripening rate of fruits and vegetables coated as per the invention, so that these products can be stored longer and transported over longer distances;
- the solution is organic, as chitosan is not a food additive, it is treated as a staple food and helps eliminate the food additives used to date, including preservatives and rheology modifiers;
- the solution helps preserve many of the quality parameters of food products, giving producers the opportunity to maintain a clean label;
- unlike known chitosan compositions and the related production methods, the compositions according to the invention result in only one ingredient, which is chitosan, being introduced into the food composition or onto the surfaces of the food product.

The examples below present the results of testing the effectiveness of the chitosan compositions according to the invention. It has been demonstrated, for example, that the chitosan compositions according to the invention have effective antimicrobial activity, which reduces the total microbial count in products during storage, and can eliminate even severe *Listeria monocytogenes* infections. The chitosan compositions have also been shown to effectively extend the storage life of vegetables and fruits coated with the compositions according to the invention.

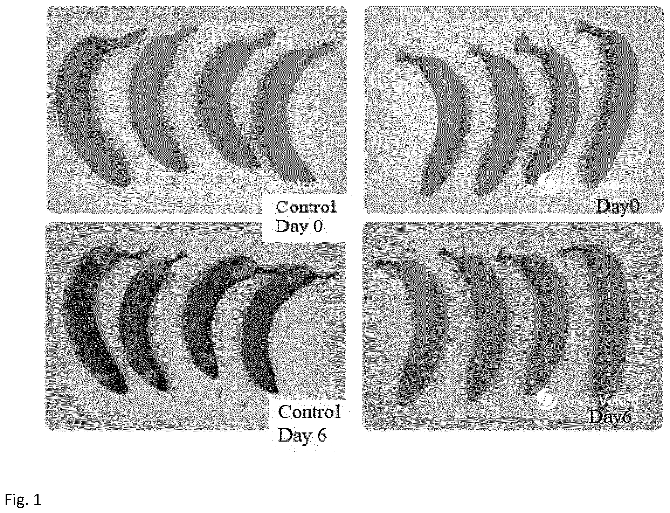

The invention is described in more detail in the examples and is shown in Figure 1, which demonstrates the effect of using the chitosan composition for preserving quality parameters of bananas coated with the composition according to the invention, i.e. pictures of bananas taken on the 1st and after the 6th day of the storage test (20 ± 1°C and 40-50% relative humidity). Bananas protected by a chitosan composition (right), control bananas (left).

### Example 1

Description of a method for obtaining chitosan compositions with a brine solution for injection into smoked fish. This non-limiting implementation example shows a method of obtaining a composition according to the invention with the following qualitative amount of chitosan, water, CO2 and NaCl (Example 1.1.-1.4.). The method is described below in sections (A), (B) and (C).

### (A) a method for obtaining a solution of chitosan, Part A

0.7 kg of chitosan with an average molecular weight, 200 kDa, and a deacetylation degree of 85% was dissolved in 46.66 kg of 0.1 M lactic acid solution, and the process was carried out in a stainless steel tank with a working volume of 80 dm3. A 1.5% chitosan solution was obtained.

However, the chitosan used is a non-chemically modified chitosan in which the functional groups are hydroxyl groups, primary amine groups and N-acetyl groups of glucosamine. Furthermore, although this non-limiting implementation example uses chitosan with an average molecular weight, 200 kDa, and a degree of deacetylation of 85%, chitosan with a molecular weight of 50-400 kDa and a degree of deacetylation of 20-99% can be used in this method according to the invention.

Although this non-limiting example of implementation employed lactic acid to produce an acidic aqueous solution of chitosan, the method according to the invention may employ any organic acid, inorganic acid or mixtures thereof as the acid, provided that said acid/acid mixture is edible to humans and/or animals (e.g. acetic acid, citric acid, ascorbic acid, glycolic acid, hydrochloric acid).

0.5 M sodium hydroxide solution was gradually added to the solution thus prepared, at a rate of 2 cm3/minute, with continuous stirring using a mechanical stirrer and a rotation speed of 150 rpm until a pH of 9.0 was reached (8.42 kg of 0.5 M NaOH solution was used).

Even though this non-limiting implementation example uses a sodium hydroxide solution, the method according to the invention provides that the neutralisation of the chitosan solution can be carried out with other alkaline aqueous solutions containing alkaline substances permitted in the food industry (e.g. potassium hydroxide).

The precipitate was separated using a filter press (hydropress) and then heated in a water bath at 95-100°C and at atmospheric pressure for 20 minutes after reaching 95°C, then separated again using the filter press, washed twice with 50 kg of purified water (2 x 25 kg each) and filtered again using the filter press. 7.13 kg of chitosan precipitate was obtained.

The resulting chitosan precipitate was transferred to an 80 dm3 stainless steel tank and suspended in 42.87 kg of purified water. The mixture was then homogenised using a hand-held homogeniser for 10 minutes at 3500 rpm, to obtain a chitosan suspension. The resulting solution was then saturated with gaseous carbon dioxide for 30 min at room temperature and at atmospheric pressure, while continuously stirring the system. Carbon dioxide was introduced into the tank using a CO2 inlet valve that allows the gas to be broken into small bubbles, mounted in the bottom of the tank, at a pressure of 4 bar. Carbon dioxide saturation continued until the pH of the saturated solution reached 5.4 and the chitosan was dissolved. As a result of the process, a clear aqueous solution of chitosan was obtained with the following qualitative composition: water, chitosan and carbon dioxide, with a chitosan concentration of 1.4% by weight (minus the losses that occurred as a result of the precipitate separation processes carried out, ±0.025%) and a carbon dioxide concentration in the range of 0.3±0.1%. The rest of the solution was water.

The resulting solution was filtered to separate the remaining fraction of undissolved chitosan and stored in sealed drums made of food-grade plastic until use. The thus prepared Part A was used to produce all the chitosan compositions described in Example 1.

### (B) the process of making brine solutions, Part B

To prepare chitosan compositions with different concentrations of sodium chloride, a number of aqueous sodium chloride solutions were prepared as Part B, for which the production process parameters are summarised in Table 1.

**Table 1. Process parameters for producing Part B solutions necessary for making the chitosan compositions described in Example 1.**

| Item | Production process parameter | Unit | Part B for Example 1.1. | Part B for Example 1.2. | Part B for Example 1.3. | Part B for Example 1.4. |
|---|---|---|---|---|---|---|
| 1 | Sodium chloride concentration in Part B | [%] | 27.0 | 32.0 | 20.0 | 14.0 |
| 2 | Sodium chloride weight | [kg] | 13.5 | 16.0 | 10.0 | 7.0 |
| 3 | Water weight | [kg] | 35.5 | 34.0 | 40.0 | 43.0 |

To produce the individual solutions of Part B (necessary to produce the individual chitosan compositions), a pre-set weight of sodium chloride (Table 1, parameter 2) was added to a pre-set weight of water (Table 1, parameter 3) for the specific chitosan composition. For example, in order to produce Part B necessary for chitosan composition 1.1, 13.5 kg of sodium chloride was dissolved in 36.5 kg of purified water, the process was carried out in a stainless steel tank with a working volume of 80 dm3. A 27% sodium chloride solution was obtained. The resulting solution was stored in sealed drums made of food-grade plastic until use.

### (C) production process for chitosan compostions (a solution of chitosan and sodium chloride)

To prepare chitosan compositions with different concentrations of sodium chloride, 50 kg of Part A solution was mixed with 50 kg of individual Part B solutions. The process was carried out in a tank equipped with a stirrer and a nozzle for carbon dioxide saturation, by gradually adding the Part B solution to the Part A solution with gentle stirring and simultaneous saturation with carbon dioxide gas (the rate of adding the Part B solution to the Part A solution was maintained at 2.5 kg/min). For instance, mixing 50 kg of Part A and 50 kg of Part B for Example 1.1. results in a chitosan composition which has a chitosan concentration of 0.7%, a sodium chloride concentration of 13.5% and a carbon dioxide concentration of 0.3±0.1%. The chitosan composition prepared in this way was stored in tightly closed drums made of plastic permitted to come into contact with food, until it was used as a solution for fish injection before the smoking process.

In this implementation example, water with a hardness of 10 °dH was used for each of the steps described above.

Although in this non-limiting example of implementation water with a hardness of 10 °dH was used, the method according to the invention states that the process for producing the chitosan composition variant described in the present example can use water with a different hardness, i.e. from 0 to 30°dH.

In other variants according to the invention, mixing 50 kg of Part A and 50 kg of Part B for Examples 1.2.-1.4 produced a chitosan composition with a chitosan concentration of 0.7%, a sodium chloride concentration of 16.0; 10.0 and 7.0%, respectively, and a carbon dioxide concentration of 0.3±0.1%.

### Example 2

Description of a method for introducing chitosan compositions into a fish fillet prior to the smoking process. In this non-limiting implementation example, the chitosan compositions obtained according to the invention (Examples 1.1.-1.4.) were used as a stabilising and preserving agent for food products in the form of an active dose for direct introduction into the food product under pressure. In this implementation example, injection was chosen as the form of introducing the composition according to the invention into a food product, whereas the selected sample food product was fish before the smoking process.

Chitosan compositions obtained as described in Example 1 (1.1.-1.4.), Part C, were injected into salmon fillets (Atlantic salmon, *Salmo Salar).* The injection was performed using a typical automatic fish fillet injector equipped with a multi-needle dosing head, with parameters typical of the process. In this non-limiting example, injections were performed in several variants (Examples 2.1-2.9), for which the injection parameters, i.e., the number of chitosan composition used for injection and the injection volume, understood as % by weight of the injected fish fillet, are summarised in Table 2.

**Table 2. Fish fillet injection process parameters.**

| Ite m | Fish fillet injecting process parameter | Unit | Example 2.1. | Example 2.2. | Example 2.3. | Example 2.4. |
|---|---|---|---|---|---|---|
| 1 | Number of chitosan composition used for injection | [%] | 1.1. | 1.2. | 1.3. | 1.4. |
| 2 | Injection volume | [%] | 10.0 | 10.0 | 10.0 | 10.0 |
| | | | | | | |

| Ite m | Fish fillet injecting process parameter | Example 2.5. | Example 2.6. | Example 2.7. | Example 2.8. | Example 2.9. |
|---|---|---|---|---|---|---|
| 1 | Number of chitosan composition used for injection | 1.1. | 1.1. | 1.1. | 1.1. | 1.1. |
| 2 | Injection volume | 5.0 | 7.0 | 15.0 | 20.0 | 25.0 |

A brine solution, with a sodium chloride concentration of 13.5% w/w, injected into fish fillets for an injection volume equal to 10.0% of the weight of the injected fish fillet, was used as a control. Immediately after the injection process, salmon fillet samples containing individual chitosan compositions and control samples were manually salted in the usual way, using sodium chloride, to achieve a final sodium chloride concentration in the fish before smoking ranging from 2.0 to 2.5%, w/w. After salting, all samples were cold-smoked and then sliced using an industrial slicer and packed in trays using a thermoforming packaging machine. Assessment of quality control parameters of smoked salmon fillets containing individual chitosan compositions and control samples were then conducted for 36 days. A summary of the results of the quality control assessment is presented in Example 3. Using the 25.0% injection caused damage to the tissue structure of the fillets, which resulted in the rejection of this variant of the injection method as per the invention. For the remaining injection volumes, no negative effect of injection on tissue structure was observed; therefore, the injected fillets were sent to further stages of the smoking process.

### Example 3

Assessment of quality control parameters of smoked salmon fillets containing chitosan compositions and control samples.

Table 3 shows the changes in total volatile basic nitrogen (TVB-N) [mg/100 g sample], in salmon fillets after smoking, containing chitosan compositions, obtained as described for Example 1, Part C, and introduced into the fish as described for Example 2 and control samples, during storage tests conducted at refrigerated temperatures (4°C).

The data are from three independent experiments separated by 14 days. The measurements for each measurement point represent the average of three replicates. Measurements were made in accordance with the method described in EU OJ L 338/27, 22.12.2005. The control samples were fish fillets treated in the same way as fillets injected with chitosan compositions, except that brine (i.e. a 13.5% sodium chloride solution) was used instead of chitosan compositions. The test consisted in determining the concentration of volatile ammonium bases by titration with 0,05 M hydrochloric acid solution of a distillate obtained by steam distillation of an extract made by mixing 10 g of ground sample (fish meat) with 90 mL of perchloric acid solution and its homogenisation.

**Table 3. TVB-N values [mg/100g sample] for smoked salmon fillets containing chitosan compositions and the control sample during storage tests.**

| Day | Control (Brine) | Example 2.1. | Example 2.2. | Example 2.3. | |
|---|---|---|---|---|---|
| 4 | 2.23 ± 0.27 | 0.00 ± 0.00 | 0.00 ± 0.00 | 0.00 ± 0.00 | |
| 8 | 7.91 ± 0.06 | 3.71 ± 0.02 | 2.07 ± 0.13 | 2.97 ± 0.50 | |
| 18 | 22.16 ± 0.60 | 14.52 ± 1.30 | 13.89 ± 1.63 | 14.98 ± 0.64 | |
| 32 | 31.40 ± | 22.21 ± | 21.87 ± | 22.78 ± | |
| | 0.67 | 0.30 | 0.67 | 0.78 | |
| 36 | 36.45 ± 0.90 | 25.60 ± 0.28 | 24.87 ± 0.28 | 26.11 ± 0.18 | |

| Day | Example 2.4. | Example 2.5. | Example 2.6. | Example 2.7. | Example 2.8. |
|---|---|---|---|---|---|
| 4 | 0.00 ± 0.00 | 0.00 ± 0.00 | 0.00 ± 0.00 | 0.00 ± 0.00 | 0.00 ± 0.00 |
| 8 | 2.98 ± 0.11 | 5.26 ± 0.09 | 4.01 ± 0.23 | 1.12 ± 0.18 | 1.19 ± 0.09 |
| 18 | 15.24 ± 0.70 | 17.56 ± 0.45 | 15.36 ± 0.78 | 12.23 ± 0.56 | 12.02 ± 0.78 |
| 32 | 23.11 ± 1.10 | 25.65 ± 0.89 | 24.11 ± 1.32 | 18.24 ± 1.21 | 18.24 ± 1.32 |
| 36 | 26.96 ± 0.68 | 29.12 ± 0.67 | 27.23 ± 0.37 | 20.21 ± 0.42 | 17.87 ± 0.37 |

Table 3 shows that the replacement of brine, typical of the salmon smoking process, by chitosan compositions containing sodium chloride has a statistically significant effect on the improvement of quality control parameters of smoked salmon during storage after each day of the storage test, i.e. on the reduction of total volatile basic nitrogen (TVB-N) values. In the tests carried out, the reduction in total volatile basic nitrogen (TVB-N) values averaged 30% compared with salmon after injection with typical brine.

Table 4 shows the results of microbial counts in smoked salmon fillets containing chitosan compositions relative to the control sample (brine injection) during storage tests conducted at refrigerated temperatures (4°C). Table 4 shows the results for fish fillets injected with chitosan compositions obtained as described for Example 1, Part C, and introduced into the fish as described for Examples 2.1., and 2.5.-2.8.

Measurements were made in accordance with the method described in PN-EN ISO 4833-1. The result is presented as a percentage reduction in the number of microorganisms relative to the control sample. The control sample was fish treated in the same way as fish injected with the chitosan composition, except that brine (i.e. 13.5% sodium chloride solution) was used instead of the chitosan composition.

**Table 4. Microbial reduction rate in smoked salmon fillets containing chitosan compositionsduring refrigerated storage tests relative to the control sample.**

| | | Day | 1 | 4 | 6 | 8 | 11 | 13 |
|---|---|---|---|---|---|---|---|---|
| Example number | Example 2.1. | % reduction [%] | 68.75± 4.28 | 50.00± 3.38 | 66.67± 4.95 | 75.00± 4.21 | 33.33± 3.54 | 32.69± 7.74 |
| | Example 2.5. | | 51.24± 3.23 | 37.98± 3.18 | 52.55± 1.74 | 52.12± 2.26 | 22.56± 2.21 | 21.36± 2.64 |
| | Example 2.6. | | 57.45± 1.65 | 44.67± 2.64 | 51.72± 3.27 | 60.34± 1.74 | 28.24± 4.56 | 27.32± 1.19 |
| | Example 2.7. | | 78.21± 2.56 | 56.76± 5.48 | 72.25± 3.18 | 82.10± 2.18 | 34.42± 3.27 | 33.28± 1.21 |
| | Example 2.8. | | 84.55± 5.19 | 67.72± 3.24 | 80.45± 2.80 | 86.34± 5.26 | 41.23± 2.17 | 38.34± 4.27 |

| | | Day | 15 | 18 | 29 | | | |
|---|---|---|---|---|---|---|---|---|
| Example number | Example 2.1. | % reduction [%] | 44.44± 3.34 | 50.00± 2.65 | 25.33± 3.84 | | | |
| | Example 2.5. | | 36.26± 1.85 | 32.15± 1.17 | 15.24± 3.21 | | | |
| | Example 2.6. | | 32.74± 0.98 | 39.24± 4.24 | 18.48± 4.32 | | | |
| | Example 2.7. | | 50.53± 3.24 | 55.88± 4.21 | 32.43± 1.76 | | | |
| | Example 2.8. | | 53.35± 1.64 | 60.12± 3.23 | 38.24± 2.74 | | | |

The replacement of brine, typical for the salmon smoking process, by a chitosan composition containing sodium chloride had a statistically significant effect on improving quality control parameters of smoked salmon during storage, i.e. on lowering the number of microorganisms during storage. Microbial counts for samples containing a chitosan composition were 25 to 75% lower than after injection with typical brine. It was observed that as the volume of fish fillet injected with a chitosan composition containing brine increased, there was a greater reduction of microorganisms at a given measurement point.

Table 5 summarises the results of the test for determining the sensory properties of smoked salmon containing a selected chitosan composition obtained according to the description for Example 1, part C (Example 1.1.), and introduced into the fish according to the description for Example 2 (Example. 2.1.) in relation to the control sample (injection with brine). The determination was carried out against a control sample, i.e. fish treated in the same way as fish injected with the chitosan composition, except that brine (i.e. 13.5% sodium chloride solution) was used instead of the chitosan composition. During the sensory analysis of the smoked salmon, the texture, odour and taste were evaluated. The parameters were rated on a point scale from 1 to 5. Ten participants took part in the study. The following scoring criteria were used: 1) unacceptable quality, 2) borderline quality; 3) acceptable quality; 4) good quality; 5) very good quality. Sensory evaluation was performed 5 days after fish fillets were packaged in packaging typical of the distribution process. The study samples were anonymised.

**Table 5. Results of sensory evaluation of smoked salmon containing a chitosan composition (Sample 1) against a control sample prepared in accordance with standard production procedures (Control 2).**

| | | Sample number/ Number of votes given for the feature | |
|---|---|---|---|
| Texture Evaluation | Feature: | Sample 1 | Control 2 |
| | 1. Cohesive, firm | 5 | 4 |
| | 2. Reduced firmness | 1 | 2 |
| | 3. Inconsistent, slimy, spongy | 0 | 0 |
| | 4. Slices can be easily separated | 4 | 4 |
| | 5. Slices cannot be easily separated | 0 | 1 |
| | Score: | 4.7 | 4.5 |
| Odour Evaluation | Feature: | Sample 1 | Control 2 |
| | 1. No perceptible smoke | 1 | 1 |
| | 2. Intensely smoky | 4 | 3 |
| | 3. Aromatic | 2 | 2 |
| | 4. Foreign | 0 | 0 |
| | 5. Fish | 3 | 3 |
| | Score: | 4.8 | 5.0 |
| Taste Evaluation | Feature: | Sample 1 | Control 2 |
| | 1. Not salty | 1 | 0 |
| | 2. Sufficiently salty | 3 | 5 |
| | 3. Very salty | 1 | 1 |
| | 4. No perceptible smoke | 0 | 0 |
| | 5. Sufficiently smoky | 5 | 6 |
| | 6. Aromatic | 2 | 3 |
| | 7. Bland | 1 | 0 |
| | 8. Fish | 3 | 3 |
| | 9. Sour | 0 | 0 |
| | Score: | 4.5 | 4.7 |
| Final Score: | | 4.8 | 4.5 |

As indicated in Table 5, the structure of both smoked fish samples tested was rated very similarly at a level close to very good, with a slight indication in favour of samples containing the chitosan composition, where some respondents considered the texture of this sample to be more cohesive, firm and without signs of stratification. Salmon flavour was rated between good and close to very good. All samples were adequately salty and smoky. The smell of salmon was rated as very good.

Replacement of the brine typical of the salmon smoking process with a chitosan composition according to the invention did not substantially affect the sensory evaluation parameters of the smoked salmon.

### Example 4

A description of a method of obtaining a single-component chitosan composition. This non-limiting implementation example shows a method for producing a composition according to the invention with the following qualitative composition: chitosan, water and CO2, with a chitosan concentration of 0.7% by weight and a carbon dioxide concentration of 0.3±0.1%, w/w, produced at different values of parameters for the production process. The production process parameters are summarised in Table 6.

**Table 6. Process parameters for producing the chitosan composition described in Example 4.**

| Item | Production process parameter | Unit | Example 4.1. | Example 4.2. | Example 4.3. | Example 4.4. | Example 4.5. |
|---|---|---|---|---|---|---|---|
| 1 | Concentration of chitosan in the composition | [%] | 0.7 | 0.7 | 0.7 | 0.7 | 0.7 |
| 2 | Chitosan | [%] | 85 | 85 | 85 | 85 | 85 |
| | deacetylation degree | | | | | | |
| 3 | Average molecular mass | [kDa] | 200 | 200 | 200 | 200 | 200 |
| 4 | Chitosan weight | [kg] | 0.35 | 0.35 | 0.35 | 0.35 | 0.35 |
| 5 | Weight of 0.1 M lactic acid solution | [kg] | 23.33 | 23.33 | 23.33 | 23.33 | 23.33 |
| 6 | Type of alkali solution | N/A | NaOH | NaOH | NaOH | NaOH | KOH |
| 7 | Concentration of alkali solution | [%] | 2.0 | 1.0 | 3.0 | 10.0 | 2.0 |
| 8 | Weight of alkali solution | [kg] | 4.23 | 8.63 | 3.23 | 0.87 | 4.52 |
| 9 | pH of the solution after adding the alkali solution | N/A | 9.0 ± 0.2 | 9.0 ± 0.2 | 9.0 ± 0.2 | 9.0 ± 0.2 | 9.0 ± 0.2 |
| 10 | Weight of chitosan precipitate obtained | [kg] | 3.52 | 3.98 | 3.34 | 3.26 | 3.48 |
| 11 | Water weight Stage 2 | [kg] | 46.48 | 46.02 | 46.66 | 46.74 | 46.52 |
| 12 | Water hardness | [°dH] | 10 | 10 | 10 | 10 | 10 |
| 13 | Solution | [°C] | 20 | 20 | 20 | 20 | 20 |
| | temperature during CO₂ saturation | | | | | | |
| 14 | CO₂ saturation time | [min] | 30 | 30 | 30 | 30 | 30 |

| Item | Production process parameter | Unit | Example 4.6. | Example 4.7. | Example 4.8. | Example 4.9. | Example 4.10. |
|---|---|---|---|---|---|---|---|
| 1 | Concentration of chitosan in the composition | [%] | 0.7 | 0.7 | 0.7 | 0.7 | 0.7 |
| 2 | Chitosan deacetylation degree | [%] | 85 | 85 | 85 | 85 | 85 |
| 3 | Average molecular mass | [kDa] | 200 | 200 | 200 | 200 | 200 |
| 4 | Chitosan weight | [kg] | 0.35 | 0.35 | 0.35 | 0.35 | 0.35 |
| 5 | Weight of 0.1 M lactic acid solution | [kg] | 23.33 | 23.33 | 23.33 | 23.33 | 23.33 |
| 6 | Type of alkali solution | N/A | NaOH | NaOH | NaOH | NaOH | NaOH |
| 7 | Concentration of alkali solution | [%] | 2.0 | 2.0 | 2.0 | 2.0 | 2.0 |
| 8 | Weight of | [kg] | 4.05 | 4.99 | 6.02 | 4.27 | 4.25 |
| | alkali solution | | | | | | |
| 9 | pH of the solution after adding the alkali solution | N/A | 8.6±0.2 | 10.0±0.2 | 12.0±0.2 | 9.0±0.2 | 9.0±0.2 |
| 10 | Weight of chitosan precipitate obtained | [kg] | 3.80 | 3.72 | 3.12 | 3.46 | 3.19 |
| 11 | Water weight Stage 2 | [kg] | 46.20 | 46.28 | 46.88 | 46.54 | 46.88 |
| 12 | Water hardness | [°dH] | 10 | 10 | 10 | 0 | 30 |
| 13 | Solution temperature during CO₂ saturation | [°C] | 20 | 20 | 20 | 20 | 20 |
| 14 | CO₂ saturation time | [min] | 30 | 30 | 30 | 20 | 100 |

| Item | Production process parameter | Unit | Example 4.11. | Example 4.12. | Example 4.13. | | |
|---|---|---|---|---|---|---|---|
| 1 | Concentration of chitosan in the composition | [%] | 0.7 | 0.7 | 0.7 | | |
| 2 | Chitosan deacetylation degree | [%] | 85 | 85 | 85 | | |
| 3 | Average molecular mass | [kDa] | 200 | 200 | | 200 | |
| 4 | Chitosan weight | [kg] | 0.35 | 0.35 | | 0.35 | |
| 5 | Weight of 0.1 M lactic acid solution | [kg] | 23.33 | 23.33 | | 23.33 | |
| 6 | Type of alkali solution | N/A | NaOH | NaOH | | NaOH | |
| 7 | Concentration of alkali solution | [%] | 2.0 | 2.0 | | 2.0 | |
| 8 | Weight of alkali solution | [kg] | 4.19 | 4.22 | | 4.29 | |
| 9 | pH of the solution after adding the alkali solution | N/A | 9.0±0.2 | 9.0±0.2 | | 9.0±0.2 | |
| 10 | Weight of chitosan precipitate obtained | [kg] | 3.47 | 3.25 | | 3.62 | |
| 11 | Water weight Stage 2 | [kg] | 46.53 | 46.75 | | 46.38 | |
| 12 | Water hardness | [°dH] | 10 | 10 | | 10 | |
| 13 | Solution temperature during CO₂ | [°C] | 0 | 2 | | 40 | |
| | saturation | | | | | | |
| 14 | CO₂ saturation time | [min] | 20 | 20 | | 240 | |

In order to obtain a chitosan composition of the qualitative and quantitative composition given in the example, but in accordance with varying values of individual parameters of the production process (Examples 4.1.-4.13. , Table 6), each time 0.35 kg of chitosan with a molecular mass of 200 kDa and a deacetylation degree of 85% (Table 6, parameters 2,3,4) was added to 23.33 kg of aqueous 0.1 M lactic acid solution, the process being carried out in a stainless steel tank with a working volume of 80 dm3 under continuous stirring using a mechanical stirrer with a ViscoJet type stirring bar. In each case, a chitosan solution with a chitosan concentration of 1.5% w/w was obtained. Then, to the chitosan solution prepared in this way, depending on the production method variant according to the invention, a solution of alkali was gradually added, the type of alkali and its concentration being adequate for the given variant of the production method of the chitosan composition according to the invention (Table 6, parameters 6, 7), at a rate of 2 cm3/minute, with continuous stirring using a mechanical stirrer and at 150 rpm until a pH of the set value was reached (Table 6, parameter 9). The amount of alkali solution used, depending on the type and concentration of the alkali, is indicated in Table 6, parameter 8. The obtained precipitate was separated using a filter press (hydropress), washed twice with 25 kg of purified water and filtered again using the filter press, resulting in a chitosan precipitate of the specified weight (Table 6, parameter 10). The obtained precipitates were packed in plastic bags suitable for high-temperature treatment and vacuum packing, then sealed using a vacuum sealer, followed by sterilisation in an autoclave at the following sterilisation parameters: 115°C; specific sterilisation time 60 min; 2 atm). For example, in the process of making chitosan composition 4.1, 4.23 kg of 2.0% sodium hydroxide solution was used, which allowed the pH value of the solution to reach 9.0±0.2 and 3.52 kg of chitosan precipitate was obtained. After sterilisation, the obtained chitosan precipitates were transferred from the bag to a 80 dm3 stainless steel tank and then suspended in purified water in the specified amount (Table 6, parameter 11). The mixture was then homogenised using a hand-held homogeniser, for 10 minutes, at 3500 rpm, to obtain a suspension of micronised chitosan precipitate. Then, the obtained suspension was saturated with gaseous carbon dioxide at the temperature set for the given variant of the production method according to the invention (Table 6, parameter 13), until the chitosan was dissolved. In Table 6, parameter 14, carbon dioxide saturation times are given depending on the variant of the chitosan composition production method according to the invention. Carbon dioxide was introduced into the tank using a CO2 inlet valve that allows the gas to be broken into small bubbles, mounted in the bottom of the tank, at a pressure of 4 bar at the cylinder regulator. Water of a given hardness (Table No. 6, parameter 12) was used depending on the particular variant of the chitosan composition production method according to the invention. For example, when obtainng chitosan composition 4.1, sterilised chitosan precipitate suspended in 46.48 kg of purified water with a hardness of 10°dH was homogenised, and then saturated for 30 minutes with gaseous carbon dioxide at a saturated system temperature of 20°C.

As a result of the production processes carried out, chitosan compositions were obtained, each time with the following qualitative composition: water, chitosan and carbon dioxide, with a chitosan concentration of 0.7% by weight (minus the losses that occurred as a result of the precipitate separation processes carried out, ±0.025%), carbon dioxide concentration of 0.3±0.1%, w/w and pH 5.5±0.3. The resulting solutions were filtered to separate the remaining fraction of undissolved chitosan and stored in sealed drums made of food-grade plastic until use. No differences in the physical and chemical properties of the final chitosan composition were observed as a result of the modifications made to the method of producing chitosan composition (Examples 4.1.-4.13.).

The compositionin the form of a hydrogel prepared in this way according to the invention can be used, for example, as a stabilizing and preserving agent intended for external use, i.e. for application onto the surface of a food product, as a biofilm (layer, coating) for sealing and protecting the surface of food products such as fruit, vegetables or fish. The hydrogel form allows a preserving layer to be formed on the surface of the food product.

The biofilm may be obtained by known methods such as direct spraying of the stabilising and preserving agent containing the mixture as per the invention onto a food product to create a layer, for example by fogging, direct soaking or brushing, using equipment and procedures typical for the processing of such food products. The process of applying chitosan compositions in the form of a hydrogel to food products is carried out so that as much of the outer surface of the food product as possible is in contact with the chitosan composition used.

Moreover, the composition according to the invention may be used as a stabilising and preserving agent for food products in the form of an active dose for direct introduction into the food product under pressure. In this variant, the composition is introduced into the product by injection or, as a substance that is mixed into the product, applied using equipment and procedures typical of the processing of such food products. It must be noted that the process of introducing chitosan compositions in this form into food products should be carried out in such a way that the weight of the introduced chitosan composition is adjusted to the desired amount of chitosan composition to be present in the stabilised food product.

### Example 5

Evaluation of the antimicrobial activity of the chitosan compositions against *Listeria monocytogenes, Staphylococcus aureus,* and *Escherichia coli* - an in vitro quantitative test.

Evaluation of the antimicrobial activity of the chitosan compositions against *Listeria monocytogenes, Staphylococcus aureus,* and *Escherichia coli* was carried out with respect to chitosan compositions of the composition and production method described in Example 4 (Examples 4.1.-4.13), using a modified efficacy test method and preservation evaluation in accordance with ISO 11930:2019. The following bacterial strains were used in the study: *Listeria monocytogenes* ATCC 35152, *Staphylococcus aureus* SA 6538 / SA 29213, *Escherichia coli* PCM 2560.

The test consisted in determining the number of microorganisms in samples resulting from mixing 50 mL of the test sample with 0.5 mL of a 24-hour liquid culture of individual bacterial cultures (i.e. *Listeria monocytogenes, Staphylococcus aureus,* and *Escherichia coli*)*,* with a cell count of 108 CFU/mL, which were then incubated under aerobic conditions at 37°C for a pre-defined period of time. To determine the number of microorganisms in the test samples, 0.1 mL was taken at fixed time intervals to prepare serial dilutions, from which selective media were inoculated for cell counting (Oxford Agar was used for *Listeria monocytogenes,* Baird-Parker for *Staphylococcus aureus,* and Tryptic Soy Broth for *Escherichia coli*)*.* The plates were counted after 48 h incubation at 37°C. A 0.1 M phosphate buffer was used as a control.

Tables 7-8 show the results of *Listeria monocytogenes* counts at 1 h and 24 h after introduction into the test samples, respectively. The letter U indicates an uncountable number of bacterial colonies, i.e. more than 300 colonies.

**Table 7. The result of determining the number of colonies of Listeria monocytogenes bacteria 1 h from introduction into the tested samples (chitosan composition obtained with different variants of the production method according to the invention - Examples 4.1-4.13, and control - 0.1 M phosphate buffer).**

| dilution/s ample | Control (0.1 M phosphate buffer) | Example 4.1. | Example 4.2. | Example 4.3. | Exampl e 4.4. | Example 4.5. | Exampl e 4.6. |
|---|---|---|---|---|---|---|---|
| 10 ^ 0 | U | U | U | U | U | U | U |
| 10 ^ -1 | U | U | U | U | U | U | U |
| 10 ^ -2 | U | U | U | U | U | U | U |
| 10 ^ -3 | U | U | U | U | U | U | U |
| 10 ^ -4 | 292 | 119 | 108 | 117 | 121 | 105 | 108 |
| 10 ^ -5 | 34 | 17 | 19 | 18 | 19 | 15 | 16 |
| 10 ^ -6 | 1 | 4 | 3 | 4 | 5 | 3 | 3 |

| dilution/s ample | Example 4.7. | Example 4.8. | Example 4.9. | Example 4.10. | Exampl e 4.11. | Example 4.12. | Exampl e 4.13. |
|---|---|---|---|---|---|---|---|
| 10 ^ 0 | U | U | U | U | U | U | U |
| 10 ^ -1 | U | U | U | U | U | U | U |
| 10 ^ -2 | U | U | U | U | U | U | U |
| 10 ^ -3 | U | U | U | U | U | U | U |
| 10 ^ -4 | 122 | 119 | 158 | 134 | 143 | 123 | 135 |
| 10 ^ -5 | 17 | 15 | 17 | 16 | 19 | 15 | 20 |
| 10 ^ -6 | 4 | 4 | 2 | 3 | 4 | 4 | 4 |

**Table 8. The result of determining the number of colonies of Listeria monocytogenes bacteria 24 h from introduction into the tested samples (chitosan composition obtained with different variants of the production method according to the invention - Examples 4.1-4.13, and control - 0.1 M phosphate buffer).**

| dilution/s ample | Control (0.1 M phosphate buffer) | Example 4.1. | Example 4.2. | Example 4.3. | Exampl e 4.4. | Example 4.5. | Exampl e 4.6. |
|---|---|---|---|---|---|---|---|
| 10 ^ 0 | U | 0 | 0 | 0 | 0 | 0 | 0 |
| 10 ^ -1 | U | 0 | 0 | 0 | 0 | 0 | 0 |
| 10 ^ -2 | U | 0 | 0 | 0 | 0 | 0 | 0 |
| 10 ^ -3 | 69 | 0 | 0 | 0 | 0 | 0 | 0 |
| 10 ^ -4 | 7 | 0 | 0 | 0 | 0 | 0 | 0 |
| 10 ^ -5 | 1 | 0 | 0 | 0 | 0 | 0 | 0 |
| 10 ^ -6 | 0 | 0 | 0 | 0 | 0 | 0 | 0 |

| dilution/s ample | Example 4.7. | Example 4.9. | Example 4.9. | Example 4.10. | Exampl e 4.11. | Example 4.12. | Exampl e 4.13. |
|---|---|---|---|---|---|---|---|
| 10 ^ 0 | 0 | 0 | 0 | 0 | 0 | 0 | 0 |
| 10 ^ -1 | 0 | 0 | 0 | 0 | 0 | 0 | 0 |
| 10 ^ -2 | 0 | 0 | 0 | 0 | 0 | 0 | 0 |
| 10 ^ -3 | 0 | 0 | 0 | 0 | 0 | 0 | 0 |
| 10 ^ -4 | 0 | 0 | 0 | 0 | 0 | 0 | 0 |
| 10 ^ -5 | 0 | 0 | 0 | 0 | 0 | 0 | 0 |
| 10 ^ -6 | 0 | 0 | 0 | 0 | 0 | 0 | 0 |

It can be seen from Tables 7 and 8 that the chitosan composition (of the composition and production method described in Example 4) has a statistically significant effect on inhibiting the growth of *Listeria monocytogenes.* It has been shown that a complete reduction in the number of *Listeria monocytogenes* introduced into the chitosan composition occurs within 24 h of the introduction. No differences in the activity of the final chitosan composiotion were observed as a result of the modifications made to the method of producing chitosan compositions (Examples 4.1.-4.13.).

Tables 9-10 show the results of *Staphylococcus aureus* counts at 1 h and 24 h after introduction into the test samples, respectively.

**Table 9. The result of determining the number of colonies of Staphylococcus aureus bacteria 1 h from introduction into the tested samples (chitosan composition obtained with different variants of the production method according to the invention - Examples 4.1-4.13, and control - 0.1 M phosphate buffer).**

| dilution/s ample | Control (0.1 M phosphate buffer) | Example 4.1. | Example 4.2. | Example 4.3. | Exampl e 4.4. | Example 4.5. | Exampl e 4.6. |
|---|---|---|---|---|---|---|---|
| 10 ^ 0 | U | U | U | U | U | U | U |
| 10 ^ -1 | U | U | U | U | U | U | U |
| 10 ^ -2 | U | U | U | U | U | U | U |
| 10 ^ -3 | U | 195 | 176 | 186 | 196 | 156 | 167 |
| 10 ^ -4 | 168 | 28 | 26 | 25 | 32 | 18 | 23 |
| 10 ^ -5 | 25 | 7 | 8 | 7 | 8 | 5 | 6 |
| 10 ^ -6 | 3 | 0 | 0 | 0 | 0 | 0 | 0 |

| dilution/s ample | Example 4.7. | Example 4.9. | Example 4.9. | Example 4.10. | Exampl e 4.11. | Example 4.12. | Exampl e 4.13. |
|---|---|---|---|---|---|---|---|
| 10 ^ 0 | U | U | U | U | U | U | U |
| 10 ^ -1 | U | U | U | U | U | U | U |
| 10 ^ -2 | U | U | U | U | U | U | U |
| 10 ^ -3 | 188 | 165 | 194 | 176 | 156 | 165 | 164 |
| 10 ^ -4 | 26 | 23 | 35 | 21 | 16 | 22 | 31 |
| 10 ^ -5 | 5 | 5 | 9 | 8 | 5 | 6 | 6 |
| 10 ^ -6 | 0 | 0 | 0 | 0 | 0 | 0 | 0 |

**Table 10. The result of determining the number of colonies of Staphylococcus aureus bacteria 24 h from introduction into the tested samples (chitosan composition obtained with different variants of the production method according to the invention - Examples 4.1-4.13, and control - 0.1 M phosphate buffer).**

| dilution/s ample | Control (0.1 M phosphate buffer) | Example 4.1. | Example 4.2. | Example 4.3. | Exampl e 4.4. | Example 4.5. | Exampl e 4.6. |
|---|---|---|---|---|---|---|---|
| 10 ^ 0 | U | 0 | 0 | 0 | 0 | 0 | 0 |
| 10 ^ -1 | U | 0 | 0 | 0 | 0 | 0 | 0 |
| 10 ^ -2 | U | 0 | 0 | 0 | 0 | 0 | 0 |
| 10 ^ -3 | U | 0 | 0 | 0 | 0 | 0 | 0 |
| 10 ^ -4 | 84 | 0 | 0 | 0 | 0 | 0 | 0 |
| 10 ^ -5 | 9 | 0 | 0 | 0 | 0 | 0 | 0 |
| 10 ^ -6 | 0 | 0 | 0 | 0 | 0 | 0 | 0 |

| dilution/s ample | Example 4.7. | Example 4.9. | Example 4.9. | Example 4.10. | Exampl e 4.11. | Example 4.12. | Exampl e 4.13. |
|---|---|---|---|---|---|---|---|
| 10 ^ 0 | 0 | 0 | 0 | 0 | 0 | 0 | 0 |
| 10 ^ -1 | 0 | 0 | 0 | 0 | 0 | 0 | 0 |
| 10 ^ -2 | 0 | 0 | 0 | 0 | 0 | 0 | 0 |
| 10 ^ -3 | 0 | 0 | 0 | 0 | 0 | 0 | 0 |
| 10 ^ -4 | 0 | 0 | 0 | 0 | 0 | 0 | 0 |
| 10 ^ -5 | 0 | 0 | 0 | 0 | 0 | 0 | 0 |
| 10 ^ -6 | 0 | 0 | 0 | 0 | 0 | 0 | 0 |

It can be seen from Tables 9 and 10 that the chitosan composition (of the composition and production method described in Example 4) has a statistically significant effect on inhibiting the growth of *Staphylococcus aureus.* It has been shown that a complete reduction in the number of *Staphylococcus aureus* introduced into the chitosan composition occurs within 24 h of the introduction. No differences in the activity of the final chitosan composition were observed as a result of the modifications made to the method of producing chitosan compositions (Examples 4.1.-4.13.).

Tables 11-12 show the results of *Escherichia coli* counts at 1 h and 24 h after introduction into the test samples, respectively.

**Table 11. The result of determining the number of colonies of Escherichia coli bacteria 1 h from introduction into the tested samples (chitosan composition obtained with different variants of the production method according to the invention - Examples 4.1-4.13, and control - 0.1 M phosphate buffer).**

| dilution/s ample | Control (0.1 M phosphate buffer) | Example 4.1. | Example 4.2. | Example 4.3. | Exampl e 4.4. | Example 4.5. | Exampl e 4.6. |
|---|---|---|---|---|---|---|---|
| 10 ^ 0 | U | U | U | U | U | U | U |
| 10 ^ -1 | U | U | U | U | U | U | U |
| 10 ^ -2 | U | U | U | U | U | U | U |
| 10 ^ -3 | U | 155 | 150 | 148 | 174 | 164 | 156 |
| 10 ^ -4 | U | 17 | 18 | 15 | 22 | 19 | 16 |
| 10 ^ -5 | U | 3 | 6 | 4 | 6 | 3 | 3 |
| 10 ^ -6 | 71 | 0 | 0 | 0 | 0 | 0 | 0 |

| dilution/s ample | Example 4.7. | Example 4.9. | Example 4.9. | Example 4.10. | Exampl e 4.11. | Example 4.12. | Exampl e 4.13. |
|---|---|---|---|---|---|---|---|
| 10 ^ 0 | U | U | U | U | U | U | U |
| 10 ^ -1 | U | U | U | U | U | U | U |
| 10 ^ -2 | U | U | U | U | U | U | U |
| 10 ^ -3 | 180 | 144 | 157 | 153 | 160 | 164 | 173 |
| 10 ^ -4 | 21 | 17 | 18 | 18 | 19 | 19 | 21 |
| 10 ^ -5 | 4 | 3 | 7 | 5 | 8 | 8 | 9 |
| 10 ^ -6 | 0 | 0 | 0 | 0 | 0 | 0 | 0 |

**Table 12. The result of determining the number of colonies of Escherichia coli bacteria 24 h from introduction into the tested samples (chitosan composition obtained with different variants of the production method according to the invention - Examples 4.1-4.13, and control -0.1 M phosphate buffer).**

| dilution/s ample | Control (0.1 M phosphate buffer) | Example 4.1. | Example 4.2. | Example 4.3. | Exampl e 4.4. | Example 4.5. | Exampl e 4.6. |
|---|---|---|---|---|---|---|---|
| 10^0 | U | 0 | 0 | 0 | 0 | 0 | 0 |
| 10 ^ -1 | U | 0 | 0 | 0 | 0 | 0 | 0 |
| 10 ^ -2 | U | 0 | 0 | 0 | 0 | 0 | 0 |
| 10 ^ -3 | U | 0 | 0 | 0 | 0 | 0 | 0 |
| 10 ^ -4 | U | 0 | 0 | 0 | 0 | 0 | 0 |
| 10 ^ -5 | U | 0 | 0 | 0 | 0 | 0 | 0 |
| 10 ^ -6 | 73 | 0 | 0 | 0 | 0 | 0 | 0 |
| | | | | | | | |
| dilution/s ample | Example 4.7. | Example 4.9. | Example 4.9. | Example 4.10. | Exampl e 4.11. | Example 4.12. | Exampl e 4.13. |
| 10^0 | 0 | 0 | 0 | 0 | 0 | 0 | 0 |
| 10 ^ -1 | 0 | 0 | 0 | 0 | 0 | 0 | 0 |
| 10^-2 | 0 | 0 | 0 | 0 | 0 | 0 | 0 |
| 10 ^ -3 | 0 | 0 | 0 | 0 | 0 | 0 | 0 |
| 10 ^ -4 | 0 | 0 | 0 | 0 | 0 | 0 | 0 |
| 10 ^ -5 | 0 | 0 | 0 | 0 | 0 | 0 | 0 |
| 10 ^ -6 | 0 | 0 | 0 | 0 | 0 | 0 | 0 |

It can be seen from Tables 11 and 12 that the chitosan composition (of the composition and production method described in Example 4) has a statistically significant effect on inhibiting the growth of *Escherichia coli.* It has been shown that a complete reduction in the number of *Escherichia coli* introduced into the chitosan composition occurs within 24 h of the introduction. No differences in the activity of the final chitosan composition were observed as a result of the modifications made to the method of producing chitosan compositions (Examples 4.1.-4.13.).

### Example 6

Evaluation of the preserving capacity of the chitosan compositions against *Listeria monocytogenes* infection of fish meat - a quantitative test under simulated real conditions.

Evaluation of the preserving capacity of the chitosan compositions against *Listeria monocytogenes* infection of fish meat (especially cross-contamination) was carried out using a chitosan composition obtained as described in Example 4 (Example 4.1.), using a modified method described in ISO 11290-1:2017. The test consisted in determining the number of micro-organisms in samples of fish to which a chitosan composition had been applied during storage after infection with a known number of micro-organisms in comparison with a control sample of fish to which no chitosan composition e had been applied. To this end, the following was prepared: (1) Fish samples (Atlantic salmon, *Salmo salar,* 25,0±0,5 g cubes); 2. Chitosan composition as described in Example 4.1; 3. *Listeria monocytogenes* culture with an OD of 0.1. Fish samples with the chitosan composition were prepared by immersing the sample in the chitosan composition (for 10 seconds, excess gel was removed by gravity by placing the sample on a sieve for 60 seconds) and then placed in sterile containers and stored at 2°C until infected with *Listeria monocytogenes.* Control samples were prepared in the same manner but omitting immersion in the chitosan composition. Serial dilutions were made from the prepared *Listeria monocytogenes* culture with an OD of 0.1. The fish samples were infected by applying 100 µl of a *Listeria monocytogenes* culture of appropriate dilution to the surface of each sample, 1 h, 24 h and 72 h after application of the chitosan composition. Two dilutions of *Listeria monocytogenes* cultures were used separately in the study, which allowed the samples to be infected with 10 and 50 bacterial cells respectively, thus simulating infections of varying severity. The infected samples and control samples were stored at 2°C for a pre-defined period of time. The fish samples were prepared and infected under sterile conditions to avoid other cross-contamination. The methodology described in ISO 11290-1:2017 was used to determine the number of microorganisms in the samples. Determinations were performed at predefined time intervals (i.e. 2 h, 24 h, 7 days and 14 days after infection). The following bacterial strains were used in the study: *Listeria monocytogenes* ATCC 35152.

Tables 13-14 show the results of determining the *Listeria monocytogenes* counts after 2 h, 24 h, 7 days and 14 days, respectively, for fish samples containing the chitosan composition, infected with the given quantities of *Listeria monocytogenes* cells at different time intervals after applying the chitosan composition to the sample (i.e. after 1 h, 24 h and 72 h) and control samples.

**Table 13. The result of determining Listeria monocytogenes colony counts after 2 h, 24 h, 7 days and 14 days, respectively, for fish samples containing the chitosan composition and control samples infected with 100 µl of a Listeria monocytogenes culture carrying approximately 10 bacterial cells at different time intervals after applying the chitosan preparation to the sample (i.e. after 1 h, 24 h and 72 h).**

| *L. monocytogenes* determination time | control | | | chitosan composition (Example 4.1.) | | |
|---|---|---|---|---|---|---|
| | Infection time | | | Infection time | | |
| | 1h | 24h | 72h | 1h | 24 h | 72 h |
| 2h | U | U | U | 3 | 5 | 3 |
| 24 h | U | U | U | 0 | 0 | 0 |
| 7 days | U | U | U | 0 | 0 | 0 |
| 14 days | U | U | U | 0 | 0 | 0 |

**Table 14. The result of determining Listeria monocytogenes colony counts after 2 h, 24 h, 7 days and 14 days, respectively, for fish samples containing the chitosan composition and control samples infected with 100 µl of a Listeria monocytogenes culture carrying approximately 50 bacterial cells at different time intervals after applying the chitosan composition to the sample (i.e. after 1 h, 24 h and 72 h).**

| *L. monocytogenes* determination time | control | | | chitosan composition (Example 4.1.) | | |
|---|---|---|---|---|---|---|
| | Infection time | | | Infection time | | |
| | 1 h | 24 h | 72 h | 1 h | 24 h | 72 h |
| 2 h | U | U | U | 97 | 80 | 114 |
| 24 h | U | U | U | 0 | 0 | 0 |
| 7 days | U | U | U | 0 | 0 | 0 |
| 14 days | U | U | U | 0 | 0 | 0 |

It can be seen from Tables 13 and 14 that the chitosan composition (of the composition and production method described in Example 4.1.) provides statistically significant protection to the fish samples against *Listeria monocytogenes* infection. In each of the variants studied, preservation of the fish using the chitosan composition led to neutralisation of the *Listeria monocytogenes* bacteria present in the sample simulating cross-contamination within 24 hours of infection, and prevented further multiplication of *Listeria monocytogenes* during the shelf-life period.

### Example 7

Evaluation of quality control parameters of fresh salmon fillets containing a chitosan composition against control samples.

A chitosan composition obtained in accordance with Example 4 (Example 4.1.) was used to evaluate the suitability of chitosan composition as stabilisers of quality control parameters of fresh fish during storage. For this purpose, fresh salmon fillets (Atlantic salmon, *Salmo Solar)* were injected with a chitosan composition obtained as described for Example 4 (Example 4.1.). The injection was performed using a typical fish fillet injection device, with typical parameters for this process. The injection volume was programmed to be equal to 8±1% of the weight of the fish fillet being injected. Fish injected with water at the same weight ratio as samples injected with the chitosan composition were used as controls. After injection, the fish were refrigerated.

Table 15 shows the changes in total volatile basic nitrogen (TVB-N) [mg/100 g sample] in the fresh salmon fillets containing the chitosan composition and in the control samples, during storage tests conducted at refrigeration temperatures (4°C). The data are from three independent experiments separated by 7 days. The measurements for each measurement point represent the average of three replicates. TVB-N measurements were made in accordance with the method described in EU OJ L 338/27, 22.12.2005.

**Table 15. TVB-N values [mg/100g sample] for fresh salmon fillets containing a chitosan composition and the control sample during storage tests.**

| Day | chitosan composition (Example 4.1.) | No injection |
|---|---|---|
| 1 | 2.2 ± 1.12 | 13.6 ± 1.34 |
| 4 | 9.8 ± 1.84 | 15.5 ± 1.35 |
| 3 | 12.8 ± 2.43 | 17.8 ± 0.45 |
| 7 | 15.7 ± 1.16 | 19.3 ± 0.34 |
| 8 | 18.5 ± 1.66 | 38.2 ± 2.90 |

Table 15 shows that the use of a chitosan composition has a statistically significant effect on the improvement of quality control parameters of fresh salmon during storage after each day of the storage test; in this case on the reduction of total volatile basic nitrogen (TVB-N) values. The TVB-N value for the samples containing the chitosan composition was on average 18 to 52% lower than for the test samples.

Tables 16-17 show the result of two microbial count determinations in fresh salmon fillets containing the chitosan composition and control samples, after the eighth day of storage tests conducted at refrigerated temperatures (4°C). The measurements were made in accordance with the method described in PN-EN ISO 4833-1. The letter U indicates an uncountable number of bacterial colonies, i.e. more than 300 colonies.

**Table 16. The number of microbial colonies determined for fresh salmon fillets containing a chitosan composition and for control samples after the eighth day of the storage test (Sample 1).**

| Dilution | Chitosan composition (Example 4.1.) | | Control sample (No injection) | |
|---|---|---|---|---|
| | culture 1 | culture 2 | culture 1 | culture 2 |
| 10⁻¹ | U | U | U | U |
| 10⁻² | U | U | U | U |
| 10⁻³ | U | U | U | U |
| 10⁻⁴ | 200 | 186 | U | U |
| 10⁻⁵ | 27 | 13 | U | U |
| 10⁻⁶ | 2 | 1 | 132 | 127 |

**Table 17. The number of microbial colonies determined for fresh salmon fillets containing a chitosan composition and for control samples after the eighth day of the storage test (Sample 2).**

| Dilution | Chitosan composition (Example 4.1.) | | Control sample (No injection) | |
|---|---|---|---|---|
| | culture 1 | culture 2 | culture 1 | culture 2 |
| 10⁻¹ | U | U | U | U |
| 10⁻² | U | U | U | U |
| 10⁻³ | U | U | U | U |
| 10⁻⁴ | 105 | 71 | U | U |
| 10⁻⁵ | 3 | 2 | U | U |
| 10⁻⁶ | 0 | 0 | 89 | 114 |

It can be seen from Tables 16 and 17 that the use of a chitosan composition has a statistically significant effect on improving the quality control parameters of fresh salmon during the storage test, in this case reducing the number of microorganisms present in the fillets during storage. The use of the chitosan composition resulted in a decrease in the number of microorganisms by two orders of magnitude (99.1% decrease in the number of microorganisms relative to the control sample).

### Example 8

Evaluation of the effect of the concentration and its physicochemical properties, i.e. molecular mass and deacetylation degree, of chitosan used to obtain chitosan composition, on the antimicrobial activity against *Listeria monocytogenes* - a quantitative in vitro test.

In order to evaluate the effect of the concentration of chitosan contained in a chitosan composition and the physicochemical properties of the chitosan used, i.e. molecular mass and deacetylation degree, on the antimicrobial activity of chitosan compositions against bacteria of the *Listeria monocytogenes* species, a series of chitosan compositions (Example 8.1.-8.9.) were prepared, with the following qualitative composition: water, chitosan, and carbon dioxide, for which the parameters of the production process are presented in Table 18.

Evaluation of the antimicrobial activity of chitosan compositions against *Listeria monocytogenes,* was carried out using a modified efficacy test method and preservation evaluation in accordance with ISO 11930:2019, following the procedure described in Example 5. A strain of *Listeria monocytogenes,* ATCC 35152, was used in this study.

**Table 18. Process parameters for producing the chitosan compositions described in Example 8.**

| Item | Production process parameter | Unit | Example 8.1. | Example 8.2. | Example 8.3. | Example 8.4. | Example 8.5. |
|---|---|---|---|---|---|---|---|
| 1 | Concentration of chitosan in the composition | [%] | 0.1 | 0.7 | 1 | 3 | 0.7 |
| 2 | Chitosan deacetylation degree | [%] | 85 | 85 | 85 | 85 | 70 |
| 3 | Average molecular mass | [kDa] | 200 | 200 | 200 | 200 | 200 |
| 4 | Chitosan weight | [g] | 6.0 | 42.0 | 60.0 | 180.0 | 42.0 |
| 5 | Water weight Stage 1 | [g] | 389.5 | 2726.5 | 3895.0 | 11414.6 | 2726.5 |
| 6 | Acid type | N/A | lactic acid, 80% | lactic acid, 80% | lactic acid, 80% | lactic acid, 80% | lactic acid, 80% |
| 7 | Weight of the acid or its solution | [g] | 4.5 | 31.5 | 45.0 | 405.4 | 31.5 |
| 8 | Weight of 0.5 M sodium hydroxide solution used for obtaining the chitosan preci pitate | [g] | 51.9 | 484.2 | 700.3 | 2141.3 | 460.2 |
| 9 | Weight of chitosan preci pitate obtained | [g] | 77.4 | 443.1 | 625.9 | 1844.9 | 451.9 |
| 10 | Water weight | [g] | 5922.6 | 5556.9 | 5374.1 | 4155.1 | 5548.1 |
| | Stage 2 | | | | | | |
| 11 | CO₂ saturation time | [min] | 30 | 30 | 30 | 60 | 30 |
| No | Production process parameter | Unit | Example 8.6. | Example 8.7. | Example 8.8. | Example 8.9. | Example 8.10. |
| 1 | Concentration of chitosan in the composition | [%] | 0.7 | 0.7 | 0.7 | 0.7 | 0.7 |
| 2 | Chitosan deacetylation degree | [%] | 99 | 85 | 85 | 85 | 85 |
| 3 | Average molecular mass | [kDa] | 200 | 10 | 50 | 400 | 200 |
| 4 | Chitosan weight | [g] | 42.0 | 42.0 | 42.0 | 42.0 | 42.0 |
| 5 | Water weight Stage 1 | [g] | 2726.5 | 2740.5 | 2726.5 | 2663.4 | 5546.9 |
| 6 | Acid type | N/A | lactic acid 80% | lactic acid, 80% | lactic acid, 80% | lactic acid, 80% | acetic acid, 80% |
| 7 | Weight of the acid or its solution | [g] | 31.5 | 17.5 | 31.5 | 94.6 | 63.05 |
| 8 | Weight of 0.5 M sodium hydroxide solution used for obtaining the chitosan precipitate | [g] | 518.2 | 281.33 | 499.2 | 524.2 | 636.5 |
| 9 | Weight of chitosan precipitate obtained | [g] | 465.2 | 457.4 | 453.5 | 463.3 | 453.1 |
| 10 | Water weight Stage 2 | [g] | 5534.8 | 5542.6 | 5546.5 | 5536.7 | 5546.9 |
| 11 | CO₂ saturation time | [min] | 30 | 30 | 30 | 60 | 30 |
| No | Production process parameter | Unit | Example 8.11. | Example 8.12. | Example 8.13. | Example 8.14. | |
| 1 | Concentration of chitosan in the composition | [%] | 0.7 | 0.7 | 0.7 | 0.7 | |
| 2 | Chitosan deacetylation degree | [%] | 85 | 85 | 85 | 85 | |
| 3 | Average molecular mass | [kDa] | 200 | 200 | 200 | 200 | |
| 4 | Chitosan weight | [g] | 42.0 | 42.0 | 42.0 | 42.0 | |
| 5 | Water weight Stage 1 | [g] | 5576.8 | 5593.5 | 5551.6 | 5505.10 | |
| 6 | Acid type | N/A | hydrochloric acid, 33% | citric acid, 100% | glycolic acid, 70% | ascorbic acid, 100% | |
| 7 | Weight of the acid or its solution | [g] | 30.94 | 268.97 | 122.49 | 261.38 | |
| 8 | Weight of 0.5 M sodium hydroxide | [g] | 212.2 | 756.5 | 854.3 | 645.6 | |
| | solution used for obtaining the chitosan precipitate | | | | | | |
| 9 | Weight of chitosan precipitate obtained | [g] | 423.2 | 406.5 | 417.2 | 480.1 | |
| 10 | Water weight Stage 2 | [g] | 5576.8 | 5593.5 | 5582.8 | 5519.9 | |
| 11 | CO₂ saturation time | [min] | 30 | 30 | 30 | 30 | |

In order to produce the individual chitosan compositions (Example 8.1.-8.14., Table 18) a given weight of chitosan (Table 18, parameter 4), of a given molecular mass (Table 18, parameter 3) and a given degree of deacetylation of chitosan (Table 18, parameter 2) was added to an aqueous acid solution obtained by adding a given weight of suitable acid (type of acid Table 18, parameter 6, weight Table 18, parameter 7) to a given weight of water (Table 18, parameter 5); the process was carried out until the chitosan was completely dissolved in an HDPE vessel of working volume adjusted to the volume of the mixed system, using a mechanical stirrer with a ViscoJet mixing rod. A chitosan solution of the given concentration was obtained (Table 18, parameter 1). For example, to produce chitosan composition 8.1, 6.0 g of chitosan with a molecular mass of 200 kDa and a degree of deacetylation of 85% was added to an aqueous solution of lactic acid, which was obtained by adding 4.5 g of 80%, w/w lactic acid to 389.5 g of water. A 0.1% w/w chitosan solution was obtained.

Then, a 0.5 M sodium hydroxide solution was gradually added to the chitosan solutions prepared in this way, at a rate of 2 cm3/minute, with continuous stirring using a mechanical stirrer and a rotation speed of 150 rpm until a pH of 9.0±0.5 was reached. The amount of sodium hydroxide solution used to produce the individual chitosan compositions is indicated in Table 18, parameter 8. The precipitates was separated using a filtration unit and then heated in a water bath at 95-100°C for 20 minutes after reaching 95°C, then separated again using a filtration unit, washed twice with 3 kg of purified water and filtered again using the filtration unit. The amount of chitosan precipitate obtained used in the production of the individual chitosan compositions is indicated in Table 18, parameter 9. For example, in making chitosan composition 8.1, 51.9 g of 0.5 M sodium hydroxide solution was used and 77.4 g of chitosan precipitate was obtained.

In the next step of chitosan composition production, the obtained chitosan precipitates were suspended in purified water in the amount necessary to obtain a total weight of 6000.0 g, after which the mixtures were homogenised using a manual homogeniser, for 10 minutes, at 3500 rpm, to obtain suspensions of micronised chitosan precipitate. The weights of purified water in which the individual weights of chitosan precipitate were suspended are indicated in Table 18, parameter 10. The solutions obtained were then saturated with gaseous carbon dioxide over a given period of time (Table 18, parameter 11), using a mechanical stirrer with a nozzle fitted with a suitable ceramic sinter, through which carbon dioxide was fed under continuous stirring at room temperature and at atmospheric pressure. As a result of the process, chitosan compositions were obtained with the following qualitative composition: water, chitosan and carbon dioxide, with a chitosan concentration (Table 18, parameter 1, minus the losses that occurred as a result of the precipitate separation processes carried out, ±0.025%) and a carbon dioxide concentration in the range of 0.3±0.1%. The resulting solutions were filtered to separate the remaining fraction of undissolved chitosan and stored in sealed plastic containers until use. For example, in the process of preparing chitosan composition 8.1, 77.4 g of chitosan precipitate was added to 5922.6 g of purified water and then, after homogenisation, saturated with gaseous carbon dioxide for 30 minutes, resulting in a chitosan composition with the following qualitative composition: water, chitosan and carbon dioxide, with a chitosan concentration of 0.1% by weight (minus the losses resulting from the precipitate separation processes carried out, ±0.025%) and a carbon dioxide concentration of 0.3±0.1%.

Tables 19-21 show the results of *Listeria monocytogenes* counts at 1 h, 24 h and 48 h after introduction into the test samples, respectively. The letter U indicates an uncountable number of bacterial colonies, i.e. more than 300 colonies.

**Table 19. The result of determining the number of colonies of Listeria monocytogenes bacteria 1 h from introduction into the tested samples (chitosan composition - Examples 8.1.-8.14. control - 0.1 M phosphate buffer).**

| Dilution | Unit | Exampl e 8.1. | Exampl e 8.2. | Example 8.3. | Exampl e 8.4. | Example 8.5. | Exampl e 8.6. |
|---|---|---|---|---|---|---|---|
| 10 ^ 0 | [cfu] | U | U | U | U | U | U |
| 10 ^ -1 | [cfu] | U | U | U | U | U | U |
| 10 ^ -2 | [cfu] | U | U | U | U | U | U |
| 10 ^ -3 | [cfu] | U | U | U | 192 | U | U |
| 10 ^ -4 | [cfu] | 138 | 107 | 82 | 20 | 194 | 85 |
| 10 ^ -5 | [cfu] | 11 | 12 | 3 | 1 | 24 | 9 |
| 10 ^ -6 | [cfu] | 2 | 3 | 0 | 0 | 5 | 0 |
| | | | | | | | |

| Dilution | Unit | Example 8.7. | Exampl e 8.8. | Exampl e 8.9. | Exampl e 8.10. | Example 8.11. | Exampl e 8.12. |
|---|---|---|---|---|---|---|---|
| 10 ^ 0 | [cfu] | U | U | U | U | U | U |
| 10 ^ -1 | [cfu] | U | U | U | U | U | U |
| 10 ^ -2 | [cfu] | U | U | U | U | U | U |
| 10 ^ -3 | [cfu] | 188 | 220 | U | U | U | U |
| 10 ^ -4 | [cfu] | 31 | 62 | 220 | 107 | 107 | 107 |
| 10 ^ -5 | [cfu] | 2 | 5 | 35 | 4 | 7 | 8 |
| 10 ^ -6 | [cfu] | 0 | 0 | 7 | 0 | 1 | 3 |

| Dilution | Unit | Example 8.13. | Example 8.14. | Phosphate buffer 0.1 M (control) | | | |
|---|---|---|---|---|---|---|---|
| 10 ^ 0 | [cfu] | U | U | U | | | |
| 10 ^ -1 | [cfu] | U | U | U | | | |
| 10 ^ -2 | [cfu] | U | U | U | | | |
| 10 ^ -3 | [cfu] | U | U | U | | | |
| 10 ^ -4 | [cfu] | 107 | 107 | 268 | | | |
| 10 ^ -5 | [cfu] | 5 | 20 | 42 | | | |

**Table 20. The result of determining the number of colonies of Listeria monocytogenes bacteria 24 h from introduction into the tested samples (chitosan compositions - Examples 8.1.-8.14. control - 0.1 M phosphate buffer).**

| Dilution | Unit | Exampl e 8.1. | Example 8.2. | Exampl e 8.3. | Exampl e 8.4. | Example 8.5. | Exampl e 8.6. | |
|---|---|---|---|---|---|---|---|---|
| 10 ^ 0 | [cfu] | 64 | 0 | 0 | 0 | 0 | 0 | |
| 10 ^ -1 | [cfu] | 5 | 0 | 0 | 0 | 0 | 0 | |
| 10 ^ -2 | [cfu] | 0 | 0 | 0 | 0 | 0 | 0 | |
| 10 ^ -3 | [cfu] | 0 | 0 | 0 | 0 | 0 | 0 | |
| 10 ^ -4 | [cfu] | 0 | 0 | 0 | 0 | 0 | 0 | |
| 10 ^ -5 | [cfu] | 0 | 0 | 0 | 0 | 0 | 0 | |
| 10 ^ -6 | [cfu] | 0 | 0 | 0 | 0 | 0 | 0 | |

| Dilution | Unit | Exampl e 8.7. | Example 8.8. | Exampl e 8.9. | Exampl e 8.10. | Example 8.11. | Exampl e 8.12. | |
|---|---|---|---|---|---|---|---|---|
| 10 ^ 0 | [cfu] | 0 | 0 | 0 | 0 | 0 | 0 | |
| 10 ^ -1 | [cfu] | 0 | 0 | 0 | 0 | | 0 | 0 |
| 10 ^ -2 | [cfu] | 0 | 0 | 0 | 0 | | 0 | 0 |
| 10 ^ -3 | [cfu] | 0 | 0 | 0 | 0 | | 0 | 0 |
| 10 ^ -4 | [cfu] | 0 | 0 | 0 | 0 | | 0 | 0 |
| 10 ^ -5 | [cfu] | 0 | 0 | 0 | 0 | | 0 | 0 |
| 10 ^ -6 | [cfu] | 0 | 0 | 0 | 0 | | 0 | 0 |

| Dilution | Unit | Exampl e 8.13. | Example 8.14. | Phosphate buffer 0.1 M (control) | | | | |
|---|---|---|---|---|---|---|---|---|
| 10 ^ 0 | [cfu] | 0 | 0 | U | | | | |
| 10 ^ -1 | [cfu] | 0 | 0 | U | | | | |
| 10 ^ -2 | [cfu] | 0 | 0 | U | | | | |
| 10 ^ -3 | [cfu] | 0 | 0 | 98 | | | | |
| 10 ^ -4 | [cfu] | 0 | 0 | 20 | | | | |
| 10 ^ -5 | [cfu] | 0 | 0 | 2 | | | | |
| 10 ^ -6 | [cfu] | 0 | 0 | 0 | | | | |

**Table 21. The result of determining the number of colonies of Listeria monocytogenes bacteria 48 h from introduction into the tested samples (chitosan compositions - Examples 8.1.-8.14. control - 0.1 M phosphate buffer).**

| Dilution | Unit | Exampl e 8.1. | Example 8.2. | Exampl e 8.3. | Exampl e 8.4. | Example 8.5. | Exampl e 8.6. | |
|---|---|---|---|---|---|---|---|---|
| 10 ^ 0 | [cfu] | 0 | 0 | 0 | 0 | 0 | 0 | |
| 10 ^ -1 | [cfu] | 0 | 0 | 0 | 0 | 0 | 0 | |
| 10 ^ -2 | [cfu] | 0 | 0 | 0 | 0 | 0 | 0 | |
| 10 ^ -3 | [cfu] | 0 | 0 | 0 | 0 | 0 | 0 | |
| 10 ^ -4 | [cfu] | 0 | 0 | 0 | 0 | 0 | 0 | |
| 10 ^ -5 | [cfu] | 0 | 0 | 0 | 0 | 0 | 0 | |
| 10 ^ -6 | [cfu] | 0 | 0 | 0 | 0 | | 0 | 0 |

| Dilution | Unit | Exampl e 8.7. | Example 8.8. | Exampl e 8.9. | Exampl e 8.10. | | Example 8.11. | Exampl e 8.12. |
|---|---|---|---|---|---|---|---|---|
| 10 ^ 0 | [cfu] | 0 | 0 | 0 | 0 | | 0 | 0 |
| 10 ^ -1 | [cfu] | 0 | 0 | 0 | 0 | | 0 | 0 |
| 10 ^ -2 | [cfu] | 0 | 0 | 0 | 0 | | 0 | 0 |
| 10 ^ -3 | [cfu] | 0 | 0 | 0 | 0 | | 0 | 0 |
| 10 ^ -4 | [cfu] | 0 | 0 | 0 | 0 | | 0 | 0 |
| 10 ^ -5 | [cfu] | 0 | 0 | 0 | 0 | | 0 | 0 |
| 10 ^ -6 | [cfu] | 0 | 0 | 0 | 0 | | 0 | 0 |

| Dilution | Unit | Exampl e 8.13. | Example 8.14. | Phosphate buffer 0.1 M (control) | | | | |
|---|---|---|---|---|---|---|---|---|
| 10 ^ 0 | [cfu] | 0 | 0 | U | | | | |
| 10 ^ -1 | [cfu] | 0 | 0 | U | | | | |
| 10 ^ -2 | [cfu] | 0 | 0 | 106 | | | | |
| 10 ^ -3 | [cfu] | 0 | 0 | 12 | | | | |
| 10 ^ -4 | [cfu] | 0 | 0 | 4 | | | | |
| 10 ^ -5 | [cfu] | 0 | 0 | 0 | | | | |
| 10 ^ -6 | [cfu] | 0 | 0 | 0 | | | | |

It can be seen from Tables 19, 20 and 21 that all chitosan compositions (Examples 8.1.-8.14., of the composition and production method described in Example 8) have a statistically significant effect on inhibiting the growth of *Listeria monocytogenes.* It has been shown that a complete reduction in the number of *Listeria monocytogenes* introduced into the chitosan compositions in Examples 8.2-8.14 occurs within 24 h of the introduction. In the case of the chitosan composition from Example 8.1, a complete reduction in the number of *Listeria monocytogenes* bacteria occurred within 48 h. The experiment showed slight differences in the activity of the produced chitosan compositions against *Listeria monocytogenes.* An increase in antimicrobial activity was observed with an increase in the concentration of chitosan in the chitosan composition, as well as with a decrease in the molecular mass and a decrease in the degree of deacetylation of the chitosan used to prepare the chitosan compositions. No differences in antimicrobial activity were observed for chitosan compositions made using different acids in the chitosan precipitate preparation step (Examples 8.2, 8.10-14).

### Example 9

Evaluation of the effect of a chitosan composition on banana quality control parameters during storage tests.

A chitosan composition obtained in accordance with Example 4 (Example 4.1.) was used to evaluate the suitability of a chitosan composition as stabiliser of quality control parameters of bananas during storage.

To apply the chitosan composition to the surface of bananas, the bananas were placed in a vessel containing the chitosan composition and left there for 20 seconds, placed on stainless steel sieves (mesh size in the range of 3-10 mm, depending on the size of the object) for gravitational removal of excess chitosan composition, and then dried under ambient conditions (20 ± 1°C and 40-50% relative humidity) for 2 h. Fruits immersed in water were used as a control and then treated in the same manner as fruits with the chitosan composition. Fruits with the chitosan composition and control fruits were stored under selected controlled temperature conditions (20 ± 1°C and 40-50% relative humidity).

Table 22 shows the results of determining the percentage weight reduction of bananas with and without the chitosan composition during the 10-day storage test. Fig.1. shows pictures of bananas during the storage test.

**Table 22. Percentage weight reduction of bananas with and without chitosan compositionduring the 10-day storage test.**

| | % weight reduction [%] | | |
|---|---|---|---|
| Day | 3 | 6 | 10 |
| Control | 6.9 | 10.8 | 18.3 |
| Chitosan composition | 4.1 | 7.1 | 14.1 |

It can be seen from Tables 22 and Fig.1 that the use of the chitosan composition has a statistically significant effect on improving the quality control parameters of bananas during the storage test, in this case on the reduction of the ripening rate of bananas (Fig.1.) and on the reduction of the weight loss rate (Table 22). The use of the chitosan compositionresulted in a reduced rate of weight loss ranging from 2.8 to 4.5% over the course of the experiment.

### Example 10

Evaluation of the effect of a chitosan composition on fresh apple quality control parameters during storage tests.

In order to evaluate the usefulness of chitosan compositions as stabilizers of quality control parameters of apples (Paulared variety) during storage, chitosan compositions obtained in accordance with Example 8 (Example 8.1-8.14) were used. Each of the chitosan compositions was applied by spraying using a system of nozzles positioned directly above the conveyor belt of a typical apple packing line (4 nozzles with a conical dosing profile, equally spaced in one line over a 60 cm stretch, placed directly in front of the entrance to the packing table, spraying intensity in relation to the consumption of the chitosan composition of 16 kg/h). Fruits without the chitosan composition were used as a control. Fruits with the chitosan composition and control fruits were stored under selected controlled temperature conditions (20 ± 1°C and 40-50% relative humidity). Fruit firmness was measured during storage. An Instron type 5542 testing machine was used to measure firmness. The test was performed with a 10 mm long, 11 mm diameter mandrel. It penetrated the fruit pulp at a rate of 0.004 m·s-1. Results are given in newtons (N). Table 23 shows the results of the firmness determination of apples with and without chitosan compositions during the 28-day storage test.

**Table 23. Results of apple firmness measurement (Paulared variety) during the storage test for fruit with and without chitosan compositionsduring the storage test.**

| | Apple firmness [N] | | | Decrease in firmness at end of test [%] |
|---|---|---|---|---|
| Storage test day | 1 | 14 | 28 | |
| Control | 57 ± 4 | 35 ± 4 | 27 ± 3 | 52 |
| Example 8.1 | 55 ± 5 | 42 ± 6 | 33 ± 3 | 40 |
| Example 8.2 | 59 ± 3 | 50 ± 3 | 45 ± 3 | 24 |
| Example 8.3 | 53 ± 3 | 49 ± 1 | 44 ± 2 | 17 |
| Example 8.4 | 58 ± 5 | 59 ± 4 | 53 ± 6 | 9 |
| Example 8.5 | 56 ± 2 | 49 ± 3 | 44 ± 3 | 21 |
| Example 8.6 | 55 ± 3 | 47 ± 3 | 42 ± 3 | 23 |
| Example 8.7 | 54 ± 5 | 43 ± 2 | 31 ± 3 | 35 |
| Example 8.8 | 57 ± 4 | 47 ± 3 | 40 ± 3 | 30 |
| Example 8.9 | 58 ± 3 | 52 ± 4 | 48 ± 3 | 17 |
| Example 8.10 | 59 ± 4 | 51 ± 3 | 46 ± 3 | 22 |
| Example 8.11 | 57 ± 5 | 49 ± 2 | 44 ± 3 | 22 |
| Example 8.12 | 56 ± 2 | 51 ± 3 | 45 ± 4 | 20 |
| Example 8.13 | 59 ± 1 | 52 ± 4 | 47 ± 2 | 20 |
| Example 8.14 | 55 ± 3 | 49 ± 2 | 44 ± 3 | 20 |

Table 23 shows that the use of chitosan compositions has a statistically significant effect on improving apple quality control parameters during the storage test, in this case maintaining a higher value of the firmness parameter. The use of each of the selected chitosan compositions caused the apples with the chitosan composition to have higher firmness compared to the control apples (without the chitosan composition).

### Example 11

In order to evaluate the effect of chitosan compositions composed of water, chitosan, carbon dioxide, sodium chloride, and gelatin in the form of injection on quality parameters of Atlantic cod (*Gadus Morhua*) fillets after thawing, during their storage in the supply chain, a number of chitosan compositions with different compositions were prepared. The compositions of the individual compositions, as well as the parameters of their production process, are summarised in Table 24.

Atlantic cod fillets were injected using a standard injection machine equipped with a multi-needle dosing head at a preset injection pressure of 2 bar. Atlantic cod fillets injected with aqueous sodium chloride solution, with a sodium chloride concentration of 3.0% w/w, were used as a control. The injection volume was programmed to be equal to 10±1% of the weight of the fish fillet being injected. After injection, the fish fillets were refrigerated.

The evaluation of the effectiveness in terms of the ability to improve the quality of cod fillets during storage was based on the measurement of total volatile basic nitrogen (TVB-N) [mg/100g sample]; moisture content [%] (in terms of the ability to retain water); total microbial count and on sensory analysis of the smell after opening the packaging in which the fillets were stored.

In order to produce the individual chitosan compositions(Examples 11.1.-11.5., Table 24), two 50 kg solutions were prepared in each case, the first being a chitosan solution composed of water, chitosan, and carbon dioxide and the second being a gelatin solution composed of water, gelatin, and sodium chloride, which were mixed in the appropriate weight ratio in the next step (Table 24, parameters 18-19).

In order to produce particular solutions of chitosan (composed of water, chitosan, and carbon dioxide), a preset weight of chitosan (Table 24, parameter 10) with a particular average molecular mass (Table 24, parameter 6) and a particular degree of chitosan deacetylation (Table 24, parameter 7) was added to an aqueous solution of lactic acid, which was obtained by adding to a preset weight of water (Table 24, parameter 12) a preset weight of 80% of the aforementioned lactic acid (Table 24, parameter 11), the process being carried out until the chitosan was completely dissolved in a stainless steel homogenisation tank of working volume adjusted to the volume of the system being mixed, using a mechanical stirrer with an anchor-type stirring rod. For example, to produce chitosan composition 11.2, 0.4 kg of chitosan with a molecular mass of 200 kDa and a degree of deacetylation of 85% was added to an aqueous solution of lactic acid, which was obtained by adding 0.79 kg of 80%, w/w lactic acid to 25.4 kg of water. Then, a 0.5 M sodium hydroxide solution was gradually added to the chitosan solutions prepared in this way, at a rate of 2 cm3/minute, with continuous stirring using a mechanical stirrer and a rotation speed of 150 rpm until a pH of 9.0±0.5 was reached. The amount of sodium hydroxide solution used to produce the individual chitosan compositions is indicated in Table 24, parameter 12. The precipitates were separated using a filtration unit, washed twice with 25 kg of purified water and filtered again using the filtration unit, and then sterilised in an autoclave (121°C, 1 atm, 20 min) having been packed in bags intended for sterilisation. The amount of chitosan precipitate obtained used in the production of the individual chitosan compositions is indicated in Table 24, parameter 14. For example, in making chitosan composition 11.2, 4.8 kg of 0.5 M sodium hydroxide solution was used and 4.1 kg of chitosan precipitate was obtained. In the next step of chitosan solution production, the obtained chitosan precipitates were suspended in purified water in the amount necessary to obtain a given final weight of the chitosan solution (Table 24, parameter 15) after which the mixtures were homogenised using a manual homogeniser, for 10 minutes, at 3500 rpm, to obtain suspensions of micronised chitosan precipitate. The solutions obtained were then saturated with gaseous carbon dioxide over a given period of time (Table 24, parameter 16), using a bubbling system as part of the homogenisation tank through which carbon dioxide is fed with continuous agitation at room temperature and at atmospheric pressure. As a result of the process, chitosan compositionswere obtained with the following qualitative composition: water, chitosan and carbon dioxide, with a chitosan concentration (Table 24, parameter 9) minus the losses that occurred as a result of the precipitate separation processes carried out, ±0.025% and a carbon dioxide concentration in the range of 0.3±0.1%. The resulting solutions were filtered to separate the remaining fraction of undissolved chitosan and stored in sealed plastic containers until use. For example, in the process of preparing chitosan composition 11.2, 4.1 kg of chitosan precipitate was added to 45.9 kg of purified water and then, after homogenisation, saturated with gaseous carbon dioxide for 30 minutes, resulting in a chitosan composition with the following qualitative composition: water, chitosan and carbon dioxide, with a chitosan concentration of 0.8% by weight (minus the losses resulting from the precipitate separation processes carried out, ±0.025%) and a carbon dioxide concentration of 0.3±0.1%.

**Table 24. Process parameters for producing the chitosan compositions described in Example 11.**

| Item | Parameter | Unit | Chitosan composition number | | | | |
|---|---|---|---|---|---|---|---|
| | | | Example 11.1. | Example 11.2. | Example 11.3. | Example 11.4. | Example 11.5. |
| **Qualitative and quantitative composition of the final chitosan compositions:** | | | | | | | |
| 1 | Concentration of chitosan in the final composition | [%] | 0.1 | 0.4 | 0.7 | 3.0 | 2.1 |
| 2 | Concentration of gelatin in the final composition | [%] | 0.2 | 1.0 | 6.0 | 0.8 | 0.5 |
| 3 | Concentration of sodium chloride in the final composition | [%] | 0.5 | 2.0 | 4.0 | 2.0 | 1.0 |
| 4 | Concentration of carbon dioxide in the final composition | [%] | 0.27 | 0.15 | 0.10 | 0.18 | 0.22 |
| 5 | Concentration of chitosan in the chitosan solution | [%] | 0.112 | 0.800 | 2.800 | 5.000 | 2.800 |

| **Process parameters for chitosan solution production:** | | | | | | | |
|---|---|---|---|---|---|---|---|
| 6 | Average molecular mass of chitosan | [kDa] | 200 | 200 | 200 | 50 | 50 |
| 7 | Chitosan deacetylation degree | [%] | 85 | 85 | 85 | 85 | 85 |
| 8 | Chitosan solution weight | [kg] | 50.0 | 50.0 | 50.0 | 50.0 | 50.0 |
| 9 | Concentration of chitosan in the chitosan solution | [%] | 0.112% | 0.8% | 2.8% | 5.0% | 2.800 |
| 10 | Chitosan weight | [kg] | 0.056 | 0.4 | 1.4 | 2.5 | 1.4 |
| 11 | Weight of 80% lactic acid | [kg] | 0.13 | 0.79 | 3.15 | 5.63 | 3.15 |
| 12 | Water weight Stage 1 | [kg] | 3.6 | 25.4 | 88.8 | 158.5 | 88.8 |
| 13 | Weight of 0.5 M sodium hydroxide solution used for obtaining the chitosan precipitate | [kg] | 0.7 | 4.8 | 17.3 | 30.3 | 17.3 |
| 14 | Weight of chitosan precipitate obtained | [kg] | 0.6 | 4.1 | 14.8 | 25.7 | 14.8 |
| 15 | Water weight Stage 2 | [kg] | 49.4 | 45.9 | 35.2 | 24.3 | 35.2 |
| 16 | CO2 saturation time | [min] | 30 | 30 | 30 | 60 | 60 |

| **Process parameters for gelatin solution production:** | | | | | | | |
|---|---|---|---|---|---|---|---|
| 17 | Concentration of | [%] | 2.0 | 2.0 | 8.0 | 2.0 | 2.0 |
| | gelatin in the gelatin solution | | | | | | |

| **Process parameters for combining chitosan solution and gelatin solution** | | | | | | | |
|---|---|---|---|---|---|---|---|
| 18 | Final weight of the chitosan composition | [kg] | 50.0 | 50.0 | 50.0 | 50.0 | 50.0 |
| 19 | Chitosan solution weight | [kg] | 45.0 | 25.0 | 12.5 | 30.0 | 37.5 |
| 20 | Gelatin solution weight | [kg] | 5.0 | 25.0 | 37.5 | 20.0 | 12.5 |
| 21 | Sodium chloride weight added to the gelatin solution before the solutions are combined | [kg] | 0.25 | 1.00 | 2.00 | 1.00 | 0.5 |

To produce gelatine solutions composed of water and gelatine, weighed and crushed Atlantic cod skins were placed in a stainless steel tank equipped with a rotary stirrer and a heating mantle and then covered with water in a weight ratio of 1:9 or 1:3 to obtain a gelatine solution with a gelatine concentration of 2.0 or 8.0% respectively. The whole mixture was heated to 70°C and left at this temperature for 60 minutes with continuous stirring. After that time, the solutions were filtered to remove fragments of the skins and then a preset amount of sodium chloride (Table 24, parameter 21) was added to the preset weights of these solutions (Table 24, parameter 20) and stirred until the sodium chloride dissolved. The gelatine solutions thus obtained (consisting of water, gelatine, and sodium chloride) were stored in tightly closed HDPE containers until use.

Table 25-28 shows the changes in total volatile basic nitrogen (TVB-N) content [mg/100 g sample] in Atlantic cod fillets containing chitosan compositions obtained as described for Example 11 (Table 24, Examples 11.1-11. 5), and control fillets (injected, under the same conditions, with a 3.0% w/w sodium chloride solution, during the refrigerated storage period, as well as changes in moisture content [%], changes in the number of microorganisms and changes in the odour profile.

**Table 25. Result of the determination of the total volatile basic nitrogen (TVB-N) content [mg/100g of sample] of Atlantic cod fillets injected after thawing with chitosan compositions (of the same composition as Example 11.1-11.4), compared to the control (aqueous NaCl solution, 3.0% w/w) during a cold storage period.**

| Item | Day | Control | Example 11.1. | Example 11.2. | Example 11.3. | Example 11.4. | Example 11.5. |
|---|---|---|---|---|---|---|---|
| 1.1. | Day 1 | 3.2±0.3 | 3.1±0.1 | 2.8±0.3 | 3.2±0.1 | 2.1±0.2 | 2.5±0.1 |
| 1.2. | Day 2 | 4.5±0.5 | 4.2±0.5 | 3.9±0.1 | 4.1±0.2 | 3.0±0.1 | 3.2±0.1 |
| 1.3. | Day 3 | 14.4±0.8 | 11.3±0.2 | 4.6±0.4 | 7.6±0.3 | 3.9±0.2 | 4.1±0.2 |
| 1.4. | Day 4 | 15.7±1.1 | 14.7±0.6 | 6.8±0.8 | 10.1±0.8 | 6.1±0.4 | 6.5±0.3 |

**Table 26. Result of the determination of the microbial count of Atlantic cod fillets injected after thawing with chitosan compositions (of the same composition as Example 11.1-11.4), compared to the control (aqueous NaCl solution, 3.0% w/w) during a cold storage period. The table shows relative values, relative to controls.**

| Item | Day | Control | Example 11.1. | Example 11.2. | Example 11.3. | Example 11.4. | Example 11.5. |
|---|---|---|---|---|---|---|---|
| 1.1. | Day 1 | 100.0 | 95.7±1.6 | 92.7±3.5 | 95.7±2.6 | 91.7±1.2 | 96.7±1.3 |
| 1.2. | Day 2 | 100.0 | 89.8±1.2 | 68.8±2.4 | 72.8±1.4 | 60.8±1.0 | 68.8±1.0 |
| 1.3. | Day 3 | 100.0 | 82.2±4.5 | 23.2±1.9 | 45.2±1.1 | 31.2±1.9 | 38.5±1.6 |
| 1.4. | Day 4 | 100.0 | 90.6±5.4 | 40.1±3.4 | 47.1±2.6 | 40.1±3.7 | 39.1±2.7 |
| 1.5. | Day 5 | 100.0 | 94.9±1.6 | 73.9±1.5 | 89.9±0.8 | 60.9±4.2 | 65.7±2.2 |

**Table 27. Result of the determination of the moisture (weight) reduction of Atlantic cod fillets injected after thawing with chitosan composition (of the same composition as Examples 11.1-11.4), compared to the control (aqueous NaCl solution, 3.0% w/w) during a cold storage period.**

| Item | Day | Control | Example 11.1. | Example 11.2. | Example 11.3. | Example 11.4. | Example 11.5. |
|---|---|---|---|---|---|---|---|
| 1.1. | Day 1 | N/A | N/A | N/A | N/A | N/A | N/A |
| 1.2. | Day 2 | 8.6±0.2 | 6.5±0.1 | 0.3±0.1 | 0.2±0.1 | 0.3±0.1 | 0.2±0.1 |
| 1.3. | Day 3 | 8.7±0.4 | 7.2±0.4 | 2.1±0.1 | 1.4±0.1 | 1.9±0.1 | 1.8±0.1 |
| 1.4. | Day 4 | 9.3±0.5 | 8.9±0.3 | 2.2±0.2 | 1.6±0.1 | 2.1±0.1 | 2.5±0.1 |
| 1.5. | Day 5 | 10.9±0.6 | 9.8±0.2 | 2.5±0.1 | 1.9±0.2 | 2.2±0.1 | 2.4±0.1 |

**Table 28. Result of the determination of sensory profile parameters of Atlantic cod fillets injected after thawing with chitosan compositions (of the same composition as Examples 11.1-11.4), relative to the control (aqueous NaCl solution, 3.0% w/w) during the period of storage under refrigeration ('+' odour of stale fish not present; '+-' slightly perceptible odour of stale fish; '- - -' intense odour of stale fish).**

| Item | Day | Control | Example 11.1. | Example 11.2. | Example 11.3. | Example 11.4. | Example 11.5. |
|---|---|---|---|---|---|---|---|
| 1.1. | Day 1 | + | + | + | + | + | + |
| 1.2. | Day 2 | + - | + | + | + | + | + |
| 1.3. | Day 3 | - | + - | + | + | + | + |
| 1.4. | Day 4 | - | + - | + | + - | + | + |
| 1.5. | Day 5 | - | - | + | + - | + | + |
| 1.6. | Day 6 | - | - | + - | --- | + | + |

It can be seen from Tables 25-28 that all chitosan compositions (Examples 11.1.-11.5., of the composition and production method described in Example 11) have a statistically significant effect on improving quality control parameters of Atlantic cod fillets after thawing during refrigerated storage. The use of chitosan compositions has the following results: (1) a reduction in the total volatile basic nitrogen (TVB-N) value (e.g., use of a chitosan composition of a composition corresponding to Example 11.2, resulted in a 67% reduction in the value of the TVB-N parameter on day 4 of the test); (2) a reduction in the total number of microorganisms (e.g., use of a chitosan composition of a composition corresponding to Example 11. 4, resulted in a reduction in the number of microorganisms by 60% on the fourth day after the start of the test); (3) maintaining the weight of the fish fillet after injection (e.g., using a chitosan composition of a composition corresponding to Example 11.2 reduced the weight loss of fish fillets during storage by 7 to 8% over the entire storage period); (4) improving the odour profile (e.g., the use of a chitosan composition of a composition corresponding to Example 11.2 allowed the fresh odour to remain fresh for 3-4 days longer).

### Example 12

A chitosan composition obtained in accordance with Example 4 (Example 4.1.) was packaged in aerosol cans (45×125mm aluminium cans) to obtain a formulation with an extended shelf life. The packaging process was carried out using a standard set of machines allowing the can to be filled with the chitosan composition, the aerosol valve to be clamped onto the can and the can to be gasified. For this purpose, 85.0 g of the chitosan compositionobtained in accordance with Example 4 was introduced into an aluminium can, the aerosol valve was tightened and 3.55±0.2 g of gaseous carbon dioxide was introduced into the can using a gasification device. The process yielded a chitosan composition with a qualitative composition of water, chitosan and carbon dioxide, with a chitosan concentration of 0.7%±0.025% and a carbon dioxide concentration of 4.0±0.5% w/w.

## Claims

1. Chitosan composition in a form of an aqueous hydrogel comprising water, chitosan, and carbon dioxide for use as a stabilising and preserving agent for food products, preferably natural food products, **characterized in that**, the final concentration of chemically unmodified chitosan, in which the functional groups are hydroxyl groups, primary amine groups, and N-acetyl groups of glucosamine, is in the range of 0.1 to 3.0%, w/w, preferably in the range of 0.1 to 1.0%, w/w, while the final concentration of carbon dioxide in the composition is in the range of 0.01 to 4.0%, w/w, preferably in the range of 0.1 to 0.8%, and in addition in the composition there is chitosan having a molecular weight in the range of 50-400 kDa, preferably 50-300 kDa, and a degree of deacetylation in the range of 20-99%, preferably in the range of 70-95%.

2. Composition according to claim 1, wherein it comprises an aqueous solution of sodium chloride, the final concentration of sodium chloride being from 7.0 to 16.0%, preferably from 10.0 to 13.5% of the composition.

3. Composition according to claim 1, wherein it comprises an aqueous solution of sodium chloride and gelatin, wherein the final concentration of sodium chloride in the composition is from 1.0 to 4.0%, preferably from 1.0 to 2.0% and the final concentration of gelatin is from 0.2 to 6.0%, preferably from 0.5 to 1.0% of the composition.

4. Use of the composition described in claims 1-3 as a preserving and stabilising agent for protecting food products, preferably natural food products, wherein the composition is in the form of a hydrogel biofilm being formed on the surface of the food product.

5. Stabilising and preserving agent for food products based on the composition described in claims 1 to 3, **characterized in that**, it is in the applicable formula of an active dosage for direct introduction into the food product under pressure, where the chitosan composition is used in an amount corresponding to 5 to 20% by weight of a food product into which the chitosan composition is introduced, preferably in the range of 8 to 10%.

6. Use of the stabilising and preserving agent described in claim 5 for the protection of meat or fish or products resulting from their processing.

7. Method for obtaining a chitosan composition described in claim 1 by mixing water, chitosan and carbon dioxide, while chitosan is being dissolved in an aqueous solution of carbonic acid in situ by the introduction of carbon dioxide, **characterized in that**, as a first step, a solution of chitosan in an aqueous solution of acidic pH is being obtained by known methods and using organic or inorganic acid, or mixtures thereof, edible to humans and/or animals, preferably in a lactic acid solution, which is then neutralised to obtain a chitosan precipitate, while it is being essential that the chitosan concentration in the aqueous solution at acidic pH is in the range of 0.7 to 3.0% w/w, preferably in the range of 1.3 to 1.6% w/w, and the acid concentration in the range of 0.5 to 5.0% w/w, preferably in the range of 0.9 to 1.5% w/w., and the neutralisation process is carried out using aqueous alkaline solutions obtained by dissolving alkaline substances, permitted to be produced in the food industry, in water, preferably sodium or potassium hydroxide, with a concentration in the range of 1 to 10%, preferably in the range of 1 to 3%, by gradually adding the alkaline solution to the chitosan solution while continuously stirring the system, and furthermore, the neutralisation process of the chitosan solution is carried out until the pH of the solution resulting from the addition of the alkali to the chitosan solution reaches a value in the range of 8.6 to 12, preferably in the range of 9 to 10, then the resulting chitosan precipitate is separated and furthermore, after separation, the precipitate is heated to a temperature in the range of 95 to 140°C and the heating is continued at this temperature for a maximum of 2 h, preferably from 20 to 60 minutes at a pressure of 1 to 3 atmospheres, and in the second stage the chitosan precipitate is supplemented with water in such quantity that, when mixed with the precipitate, a chitosan suspension is obtained in which the concentration of the chitosan relative to its dry mass is in the range of 0.1 to 3.0%, preferably in the range of 0.1 to 1.0%, after which the suspension so obtained is stirred at a temperature in the range of 0-40°C, preferably in the range of 2-25°C, preferably at atmospheric pressure, and during stirring the solution is saturated with carbon dioxide, in gaseous form, until the pH of the saturated solution is below 6.8, preferably 5.0-6.8, and the chitosan is dissolved, while all steps are carried with the use of water with a hardness in the range of 0 to 30°dH, preferably in the range of 0 to 10.

8. Method for obtaining the composition described in claim 2, **characterized in that** the chitosan composition being obtained as described in claim 6 at a concentration of chitosan in said composition in the range of 0.1 to 3.0%, preferably in the range of 0.7 to 1.5%, is mixed with a sodium chloride solution with a concentration in the range of 10 to 27%, preferably 20 to 27%, with the chitosan solution, and when the two solutions are combined, a constant supply of gaseous carbon dioxide is provided to the system while stirring constantly.

9. Method for obtaining the composition described in claim 3, **characterized in that**, the chitosan composition being obtained as described in claim 6 is mixed with a chitosan composition at a concentration of chitosan in said composition in the range of 0.1 to 3.0%, preferably in the range of 0.7 to 1.5%, with an aqueous gelatin solution with a concentration of gelatin in said gelatin solution in the range of 0.5 to 8.0%, preferably in the range of 1.0 to 2.0%, keeping the ratio of the chitosan solution to the gelatin solution from 9:1 to 1:3, and by the fact that before adding the aqueous gelatin solution to the chitosan solution, sodium chloride is added to the gelatin solution in an amount such that the final concentration of sodium chloride in the final composition is in the range of 0.5 to 4.0%, preferably in the range of 1.0 to 2.0%.
